(19) **Europäisches Patentamt / European Patent Office / Office européen des brevets**

(11) **EP 3 827 034 B1**

(12) # EUROPEAN PATENT SPECIFICATION

(45) Date of publication and mention
of the grant of the patent:
**21.02.2024 Bulletin 2024/08**

(21) Application number: **19740585.5**

(22) Date of filing: **22.07.2019**

(51) International Patent Classification (IPC):
**C08F 257/02** (2006.01)    **C08L 25/12** (2006.01)
**C08L 51/04** (2006.01)    **C08K 5/00** (2006.01)
**C08F 285/00** (2006.01)

(52) Cooperative Patent Classification (CPC):
(C-Sets available)
**C08L 25/12; C08F 257/02; C08F 285/00;**
**C08L 51/04;** C08L 2207/53      (Cont.)

(86) International application number:
**PCT/EP2019/069698**

(87) International publication number:
**WO 2020/020834 (30.01.2020 Gazette 2020/05)**

(54) **POLYACRYLATE GRAFT RUBBER COPOLYMER AND THERMOPLASTIC MOLDING COMPOSITION**

POLYACRYLATPFROPFKAUTSCHUK-COPOLYMER UND THERMOPLASTISCHE FORMZUSAMMENSETZUNG

COPOLYMÈRE DE CAOUTCHOUC GREFFÉ DE POLYACRYLATE ET COMPOSITION DE MOULAGE THERMOPLASTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2018 EP 18185194**

(43) Date of publication of application:
**02.06.2021 Bulletin 2021/22**

(73) Proprietor: **INEOS Styrolution Group GmbH**
**60325 Frankfurt (DE)**

(72) Inventors:
• **SCHULZ, Tobias**
**51103 Köln (DE)**
• **FISCHER, Wolfgang**
**69124 Heidelberg (DE)**
• **NIESSNER, Norbert**
**67159 Friedelsheim (DE)**
• **RUTHARD, Christian**
**55124 Mainz (DE)**

• **KERSCHBAUMER, Hannes**
**65812 Bad Soden am Taunus (DE)**

(74) Representative: **Jacobi, Markus Alexander**
**Patentanwälte**
**Isenbruck Bösl Hörschler PartG mbB**
**Eastsite One**
**Seckenheimer Landstrasse 4**
**68163 Mannheim (DE)**

(56) References cited:
**DE-A1- 19 523 080**

(52) Cooperative Patent Classification (CPC): (Cont.)

C-Sets
**C08F 257/02, C08F 220/1804, C08F 220/40,
C08F 220/44;
C08F 285/00, C08F 212/08, C08F 220/44;
C08L 25/12, C08L 51/04;
C08L 25/12, C08L 51/04, C08K 5/0041;
C08L 51/04, C08L 25/12**

**Description**

The invention relates to a thermoplastic molding composition having a low opacity and an improved colorability, as well as a good impact strength, which comprises at least one copolymer component made of vinyl aromatic monomers and nitrile monomers, and also at least one graft copolymer based on an acrylate rubber. The invention also proposes shaped articles produced therefrom, and uses thereof. The invention further relates to an acrylate graft copolymer which is used as an impact modifier in said thermoplastic molding compositions.

The production of poly-(styrene-co-acrylonitrile) resins is well known to a skilled person and e.g. described in Kunststoff-Handbuch [Plastics handbook] (Vieweg-Daumiller, Vol. V Polystyrol [Polystyrene], Carl-Hanser-Verlag, Munich, 1969, p 124, lines 12 ff.). Polyacrylate based graft rubber copolymers are also well known in the art as impact modifiers for poly-(styrene-co-acrylonitrile) thermoplastic polymers.

DE-A 3149358 describes impact modified styrene-acrylonitrile (SAN) copolymer molding compositions having a good colorability. The impact modifier is a graft copolymer B composed of a crosslinked polyacrylate graft base B1, a first graft shell B21 (graft ratio 2.5 to 25 wt.-%, based on B) of a vinylaromatic polymer and a second graft shell B22 (graft ratio 10 to 45 wt.-%) of a SAN copolymer. The weight average particle diameter $d_{50}$ of the graft copolymer B is 200 to 500 nm.

EP-A 0450485 discloses molding compositions with good colorability comprising a SAN matrix copolymer C, a first graft copolymer A composed of a fine particulate crosslinked acrylate polymer as the graft base A1 and a graft shell A2 of a SAN-copolymer, and a second graft copolymer B composed of a coarse-particulate crosslinked acrylate polymer as the graft base B1 ($d_{50}$ 200 to 700 nm), and a first graft shell B21 (graft ratio 2.5 to 25 wt.-%, based on B) of a vinylaromatic copolymer and a second graft shell B22 (graft ratio 10 to 45 wt.-%) of a SAN-copolymer.

US 2011/0275763 describes the production of impact resistant molding compositions comprising a SAN matrix copolymer and acrylate graft rubber copolymers (B) and (C) of different particle size. The graft copolymers (B) or (C) are composed of a crosslinked polybutylacrylate graft base b1) or c1) and a first graft shell consisting of a vinylaromatic homopolymer and a second graft shell b2) or c2) made from a SAN copolymer.

The average particle size d50 of the graft rubber copolymer B) is preferably 100 to 250 nm; the d50 value of graft rubber copolymer C) is preferably 410 to 600 nm.

However, due to the high difference in refractive index between the graft rubber copolymer and the SAN copolymer hard matrix, said prior art ASA resins exhibit a high opacity. In order to overcome this drawback, it has been tried to increase the refractive index of the graft rubber copolymer e.g. by introducing polystyrene in the rubber core.

WO 2007/142473 describes acrylate-styrene-acrylonitrile graft copolymers (ASA) and use thereof as impact modifiers in thermoplastic molding compositions based on SAN copolymers with a good colorability. The ASA graft copolymer includes: a double layered rubbery polymer comprising an inner core layer of a cross-linked alkylacrylate-vinyl aromatic copolymer and an outer core layer of a crosslinked alkylacrylate polymer; and a vinyl aromatic-unsaturated nitrile copolymer shell layer grafted onto the double layered rubbery polymer. The amount of the vinyl aromatic monomer in the inner core layer is up to 80 wt.-%. The double layered rubbery polymer has an average particle size of 100 to 300 nm.

EP-A 2889317 discloses ASA graft copolymers for use in thermoplastic resin compositions based on SAN matrix polymers. The graft copolymers have a layered structure including a seed of polystyrene, a core layer surrounding the seed made from cross-linked alkyl acrylate, and a shell layer surrounding the core made from a SAN copolymer, which thicknesses and refractive indexes are controlled in respect to the SAN matrix copolymer.

EP-A 0535456 describes multi-layered ASA graft copolymers and their use as impact modifiers for thermoplastic molding compositions comprising styrenic copolymers. Said graft copolymers (A) are consisting of 5 to 85 wt.-% of a core layer consisting of cross-linked polystyrene, 5 to 85 wt.-% of a first graft layer consisting of a crosslinked alkylacrylate copolymer, 5 to 85 wt.-% of a second graft layer of a styrene homopolymer and 5 to 85 wt.-% of a third graft layer of a SAN copolymer. The average particle size d50 of the core layer is preferably 50 to 800 nm, exemplified graft copolymers (A) have an average particle size d50 of 180 nm.

EP-A 0548762 also describes multi-layered, ASA graft copolymers with acidic and basic comonomers and their use as impact modifiers for thermoplastic molding compositions comprising styrenic copolymers. Said graft copolymers (A) are preferably consisting of 10 to 50 wt.-% of a core layer consisting of crosslinked polystyrene, 20 to 60 wt.-% of a first graft layer consisting of a crosslinked alkylacrylate terpolymer with methacrylic acid units, 20 to 60 wt.-% of a second graft layer of a styrene copolymer, in particular a SAN terpolymer with N-vinyl imidazole units, and 10 to 30 wt.-% of a third graft layer of a styrene copolymer. The average particle size d50 of the core layer is preferably 50 to 800 nm. Exemplified are only three-layered graft copolymers (A) with an average particle size d50 of 180 nm.

EP-A 0534212 discloses a mixture of fine and coarse particle sized ASA graft copolymers (A) and (B) which are used for improving the impact resistance and colorability of thermoplastic molding compositions comprising styrenic copolymers. ASA graft copolymer (A) is a 3-layered graft copolymer having an average particle size d50 of 50 to 200 nm with a core layer consisting of crosslinked polystyrene, a first graft layer consisting of a crosslinked alkylacrylate copolymer, and a second graft layer of a SAN copolymer. ASA graft copolymer (B) is a graft copolymer having an average particle size d50 of preferably 380 to 800 nm (example 510 nm), with a crosslinked polyacrylate core layer and a graft shell of a SAN copolymer.

DE 195 23 080 A1 describes a thermoplastic molding composition with improved colorability and low-temperature impact strength comprising core-shell graft copolymers composed of a crosslinked polystyrene core, with subsequent three graft layers of 1) crosslinked polybutyl acrylate, 2) polystyrene and 3) a SAN copolymer. The particle diameter of said core-shell graft copolymers is ca. 540 nm.

However, the impact strength and opacity as well as the colorability of the afore-mentioned resin compositions are often still in need of improvement. Thus, it is one object of the invention to provide a thermoplastic molding composition, in particular based on SAN-copolymers, having a good impact strength as well as a low opacity and benefits (significant pigment saving, more brilliant colors) in terms of colorability. A further object of the invention is to provide an improved impact modifier based on an acrylate graft copolymer.

One object of the present invention is a graft copolymer B produced from emulsion polymerization with a core-shell structure comprising (consisting of) a core B1 and three layers B2 to B4, in the sequence B1 to B4 from inside to outwards, and in each case based on the sum of B1 to B4:

B1: 6 to 19 wt.-%, preferably 10 to 18 wt.-%, more preferably 15 to 17 wt.-%, of a (inner) core (= graft base) B1 comprising (essentially consisting of) at least one copolymer consisting of monomers B11 and B12:

B11: 95.0 to 99.9 wt.-%, preferably 96.0 to 98.0 wt.-%, of at least one vinylaromatic monomer, and
B12: from 0.1 to 5.0 wt.-%, preferably 2.0 to 4.0 of at least one bi- or polyfunctional, crosslinking monomer; where the sum of B11 and B12 adds up to 100 wt.-%;

B2: 41 to 54 wt.-%, preferably 42 to 50 wt.-%, more preferably 43 to 45 wt.-%, of a first layer (= outer core layer grafted onto B1) B2 consisting of at least one copolymer comprising (consisting of) monomers B21 and B22:

B21: up to 99.0 wt.-%, preferably up to 98.5 wt.-%, of at least one C2-C8-alkyl acrylate;
B22: 1.0 to 5.0 wt.-%, preferably 1.5 to 3.5 wt.-%, of one or more bi- or polyfunctional, crosslinking monomers; where - based on B2 - the sum of the total monomers (in particular B21 and B22) adds up to 100 wt.-%;

B3: 1 to 19 wt.-%, preferably 3 to 15 wt.-%, more preferably 4 to 12 wt.-%, of a second layer (first graft shell layer) B3 consisting of at least one vinylaromatic polymer; and

B4: 21 to 39 wt.-%, preferably 27 to 35 wt.-%, more preferably 28 to 36 wt.-%, of a third layer (second graft shell layer) B4 consisting of at least one copolymer comprising (consisting of) at least one vinylaromatic monomer B41 and at least one nitrile monomer B42, wherein
the amount of B42, based on B4, is 20 to 33 wt.-%, preferably 22 to 28 wt.-%, and where the sum of the total monomers (in particular B41 and B42) adds up to 100 wt.-%;

where the sum of B1, B2, B3 and B4 adds up to 100 wt.-%; and

wherein the weight average particle diameter $d_w$ of the graft copolymer B is in the range of from 280 to 450 nm, preferably 310 to 370 nm, more preferably 320 to 360 nm.

In the context of the invention the phrase "(co)polymer comprising (consisting of) at least one monomer..." means that the (co)polymer comprises (or consists of) structural units derived from the monomer(s) which has/have been polymerized.

In the present application, the weight-average particle diameter $d_w$ is determined by turbidity measurement as described in Lange, Kolloid-Zeitschrift und Zeitschrift für Polymere, Band 223, Heft 1. Further suitable methods for the measurement of the weight-average particle diameter Dw are ultracentrifugation (e.g. described in Scholtan, H. Lange, Kolloid-Z. u. Z. Polymere 250, S. 782-796, 1972) or using Hydrodynamic Chromatography HDC (e.g. described in W. Wohlleben, H. Schuch, "Measurement of Particle Size Di. Vega, p. 130-153).

Wt.-% means % by weight.

Graft Copolymer B

Preferably graft copolymer B is composed as follows:

B1: 10 to 18 wt.-%, preferably 15 to 17 wt.-%, of a core B1 comprising (consisting essentially of) at least one, preferably one, copolymer consisting of monomers B11 and B12:

> B11: 96.0 to 98.0 wt.-%, of at least one vinylaromatic monomer, and
> B12: 2.0 to 4.0 of at least one bi- or polyfunctional, crosslinking monomer;
> where the sum of B11 and B12 adds up to 100 wt.-%;

B2: 42 to 50 wt.-%, preferably 43 to 45 wt.-%, of a first layer B2 consisting of at least one, preferably one, copolymer consisting of monomers B21 and B22:

> B21: 96.5 to to 98.5 wt.-%, of at least one C2-C8-alkyl acrylate;
> B22: 1.5 to 3.5 wt.-%, of one or more bi- or polyfunctional, crosslinking monomers;
> where - based on B2 - the sum of B21 and B22 adds up to 100 wt.-%;

B3: 3 to 15 wt.-%, preferably 4 to 12 wt.-%, of a second layer B3 consisting of at least one, preferably one, vinylaromatic polymer; and

B4: 27 to 35 wt.-%, preferably 28 to 36 wt.-%, of a third layer B4 consisting of at least one, preferably one, copolymer consisting of at least one vinylaromatic monomer B41 and at least one nitrile monomer B42, wherein the amount of B42, based on the total amount of B4, is 20 to 33 wt.-%, preferably 22 to 28 wt.-%;

where the sum of B1, B2, B3 and B4 adds up to 100 wt.-%; and

wherein the weight average particle diameter $d_w$ of the graft copolymer B is in the range of from 310 to 370 nm, preferably 320 to 360 nm.

More preferably graft copolymer B according to the invention is composed as follows:

B1: 15 to 17 wt.-% of a core B1 comprising (consisting essentially of) at least one, preferably one, copolymer consisting of monomers B11 and B12:

> B11: 96.0 to 98.0 wt.-%, of at least one vinylaromatic monomer, and
> B12: 2.0 to 4.0 of at least one bi- or polyfunctional, crosslinking monomer;
> where the sum of B11 and B12 adds up to 100 wt.-%;

B2: 43 to 45 wt.-%, of a first layer B2 consisting of at least one, preferably one, copolymer consisting of monomers B21 and B22:

> B21: 96.5 to 98.5 wt.-%, of at least one C2-C8-alkyl acrylate;
> B22: 1.5 to 3.5 wt.-%, of one or more bi- or polyfunctional, crosslinking monomers;
> where - based on B2 - the sum of B21 and B22 adds up to 100 wt.-%;

B3: 4 to 12 wt.-%, of a second layer B3 consisting of at least one, preferably one, vinylaromatic polymer; and

B4: 28 to 36 wt.-%, of a third layer B4 consisting of at least one, preferably one, copolymer consisting of at least one vinylaromatic monomer B41 and at least one nitrile monomer B42, wherein the amount of B42, based on the total amount of B4, is 20 to 33 wt.-%, preferably 22 to 28 wt.-%;

where the sum of B1, B2, B3 and B4 adds up to 100 wt.-%; and

wherein the weight average particle diameter $d_w$ of the graft copolymer B is in the range of from 320 to 360 nm.

According to the invention the first (outer core) layer B2 surrounds the (inner) core B1, the second layer B3 surrounds the first layer B2, and the third layer B4 surrounds the second layer B3.

Preferably graft copolymer B according to the invention consists of a core B1 and three layers B2 to B4.

The graft copolymers B according to the invention are prepared from a graft base B1 (= core), as well as from layers B2, B3 and B4 grafted onto them one after the other. According to the present invention the graft base B1 (= core) is prepared in presence of a seed polymer S-B1, preferably a crosslinked acrylate rubber latex.

## Core (graft base) B1

The (inner) core (graft base) B1 of the graft copolymer B according to the invention has a glass transition temperature Tg of above 25°C.

The glass transition temperature Tg can be determined using the DSC according DIN EN ISO 11358-1:2014 (heating rate 5 K/min).

Preferably the core B1 essentially consists of (more than 85 wt.-%, preferably more than 90 wt.-%, based on the total monomers used for core B1) one copolymer consisting of monomers B11 and B12.

"Essentially consists" means that the core B1 further comprises small amounts (not more than 15 wt.-%, preferably not more than 10 wt.-%) of a seed latex polymer S-B1.

Suitable vinylaromatic monomers B11 are styrene, alpha-methylstyrene and ring-alkylated styrenes such as p-methylstyrene and tert-butylstyrene. Styrene, alpha-methylstyrene and p-methylstyrene are particularly preferably used alone or in a mixture. Styrene is most preferred.

The copolymer of the graft base B1 moreover comprises at least one crosslinking monomer B12. Such monomers B12 are bi- or polyfunctional comonomers having at least two olefinic double bonds, preferably bifunctional comonomers having two olefinic double bonds, examples being divinyl esters of dicarboxylic acids, for example of succinic acid and of adipic acid, diallyl and divinyl ethers of bifunctional alcohols, for example of ethylene glycol and of butane-1,4-diol, diesters of acrylic acid and methacrylic acid with the bifunctional alcohols mentioned, 1,4-divinylbenzene, and triallyl cyanurate.

Preference is given to the allyl esters of acrylic and methacrylic acid, in particular allyl methacrylate (AMA), and particular preference is given to the acrylic ester of tricyclodecenyl alcohol which is known as dihydrodicyclopentadienyl acrylate (DCPA).

In particular, the afore-mentioned crosslinkers simultaneously act as graft-active monomers. DCPA has proven to be a particularly advantageous crosslinking agent and graft-active monomer.

The crosslinking comonomer is used in amounts of from 0.1 to 5 wt.-%, preferably 2 to 4 wt.-%, based on B11 and B12. Preferably DCPA is used in amounts of 2 to 4 wt.-%, based on B11 and B12.

In particularly the core B1 essentially consists of (more than 85 wt.-%, preferably more than 90) crosslinked polystyrene, preferably a DCPA crosslinked polystyrene. The weight average particle diameter $d_w$ of the graft base B1 is in the range of from 120 to 250 nm, preferably 140 to 200 nm.

## First Layer B2

The first (outer core) layer B2 of the graft copolymer B according to the invention is a rubbery layer made from an elastomeric rubber material generally having a glass transition temperature Tg below 0°C. Preferably the layer B2 consists of one copolymer comprising, preferably consisting of, monomers B21 and B22. The acrylate monomer B21 used for the copolymer of the first layer B2 is generally at least one C2-C8-alkylacrylate, preferably C2-C4-alkyl acrylate.

The alcohol component of the C2-C8-alkyl acrylate can be of linear or branched structure, a linear structure is preferred. Particularly suitable are ethyl acrylate, 2-ethylhexyl acrylate, and n-butyl acrylate. Preference is given to 2-ethylhexyl acrylate and n-butyl acrylate, and very particular preference is given to n-butyl acrylate. It is also possible to use a mixture of various C2-C8-alkylacrylates differing in their alkyl radical. Preferably one C2-C8-alkyl acrylate, more preferably one C2-C4-alkyl acrylate, most preferably n-butyl acrylate is used.

The copolymer of layer B2 further comprises at least one crosslinking monomer B22. The afore-mentioned statements made under B1 for the crosslinking monomers B12 also apply to the corresponding components B22.

The copolymer of layer B2 may optionally comprise further copolymerizable monomers B23 in an amount of up to 29.9 wt%, preferably 0 to 20 wt.-%, more preferably 0 to 10 wt.-%. The at least one further comonomer B23 is selected from: styrene, $\alpha$-methylstyrene, acrylonitrile, methacrylonitrile, methylmethacrylate, and N-phenylmaleimide (N-PMI).

Preferably no further comonomer B23 is present in the copolymer of layer B2.

In particularly the copolymer of layer B2 consists of n-butyl acrylate and DCPA in the amounts as described above.

The swelling index of the product of core B1 with layer B2 generally is below 20, preferably from 7 to 14, particularly preferably from 8 to 12. The swelling index is a measure of the ability of a solvent to swell a polymer. An example of a conventional swelling agent is methyl ethyl ketone or toluene.

By way of example, the swelling index is determined by a method in which about 0.2 g of the solid in a dispersion of a basic rubber (e.g. product of B1+B2) converted to a film via evaporation of the water is swollen in an amount of toluene, e.g. 50 g. The toluene is removed by suction after, for example, 24 hours, and the specimen is weighed. The specimen is again weighed after it has been dried in vacuo. The swelling index is the ratio of the weight after the swelling procedure to the dry weight after final drying.

Second Layer B3

Preferably the second layer (= first graft layer) B3 of graft copolymer B according to the invention consists of one vinylaromatic polymer. Suitable vinylaromatic monomers for the production of the vinylaromatic polymer of the layer B3 are such as styrene and/or styrene derivatives, for example alkylstyrene, preferably α-methylstyrene, and ring-alkylated styrenes, for example p-methylstyrene and/or tert-butylstyrene. It is preferable to use styrene. More preferably the layer B3 consists of polystyrene.

The fraction of B3 - based on B - is generally 1 to 19 wt.-%, preferably 3 to 15 wt.-%, more preferably 4 to 12 wt.-%.

Third Layer B4

Examples of the nitrile monomers B42 that are used for the copolymer of the third layer B4 are acrylonitrile and methacrylonitrile. Preference is given to acrylonitrile. As vinyl aromatic monomers B41 the monomers as described above for the layer B3 can be used. Preferably styrene and/or α-methylstyrene, more preferably styrene, are used in addition to the nitrile monomers B42.

It being possible for vinyl aromatic monomers B41, in particular styrene, and/or nitrile monomers B42, in particular acrylonitrile, to be replaced partially (up to 30 wt.-%, preferably up to 20 wt.-%, more preferably up to 15 wt.-%) by other copolymerizable monomers such as methyl methacrylate, N-phenylmaleimide and maleic anhydride, preference is given to methyl methacrylate and/or maleic anhydride.

Preferably no further comonomer is present in the copolymer of layer B4.

In particularly the copolymer of layer B4 consists of styrene and acrylonitrile in the amounts as described above. More preferably the copolymer of layer B4 consists of 70 to 78 wt.-% styrene and 22 to 30 wt.-% acrylonitrile.

One further subject of the invention is a process for the preparation of the graft copolymer B according to the invention.

Process for the preparation of the graft copolymer B

Graft copolymers B with a core/shell structure according to the invention are generally prepared from a graft base B1 (= core), as well as from layers B2, B3 and B4 grafted onto them, one after the other.

The graft copolymers B according to the invention are produced via aqueous free-radical emulsion polymerization preferably in the presence of a seed polymer latex (S-B1). The use and the preparation of a seed polymer latex by free-radical-initiated aqueous emulsion polymerization is known (cp. US 2,520,959).

The seed polymer latex (S-B1) is a starting rubber latex having a weight average particle diameter dw of below that of the particles of the final graft base B1. The size of the particles of polymer may vary over a wide range. Often the starting rubber latex has a weight average particle diameter $d_w$ of less than 120 nm, more often less than 100 nm, preferably less than 90 nm, more preferably in the range of 50 to 85 nm, most preferred 60 to 85 nm. The polymer used as "seed" need not to be identical in composition with the polymer present in the final rubber latex (graft base B1). Preferably the starting rubber latex S-B1 is a crosslinked acrylate rubber latex, more preferably a crosslinked butylacrylate rubber latex.

The seed polymer latex (S-B1) is generally used in amounts of from 0.01 to 3 wt.-%, frequently from 0.03 to 2 wt.-%, and often from 0.04 to 1.5 wt.-%, based on the total amount of monomer used for the preparation of graft copolymer B. By use of such a seed polymer latex a controlled setting of the particle size of the polymer particles can be achieved.

The production of graft copolymers from an elastomeric ASA graft base and a graft shell is well known (see US 2011/0275763). Graft copolymers can be produced by grafting in a plurality of stages (see US 2011/0275763 and EP-A 0535456).

For the production process for the graft copolymers B the general procedure is that the core (= graft base) B1 is first produced in presence of a seed polymer latex (S-B1), preferably a crosslinked acrylate rubber latex, by emulsion polymerization, by polymerizing vinylaromatic monomers B11, as well as crosslinking, bi- or polyfunctional monomers B12 in aqueous emulsion with a free-radical initiator (e.g. potassium persulfate) at 30 to 120 °C, preferably between 40 and 90 °C, more preferably 50 to 80 °C.

On this resultant latex of the graft base B1 (= core) then, in aqueous emulsion with a free-radical initiator (e.g. potassium persulfate) at temperatures of from 30° to 120°C, preferably from 40 to 100°C, more preferably 50 to 80°C, in a first graft reaction a first layer B2 (= outer core layer) is prepared by addition and polymerization of at least one C2-C8-alkyl acrylate B21 (e.g. butyl acrylate), optionally further comonomers, and crosslinking monomers B22 (e.g. DCPA or AMA).

On this resultant rubber latex (graft base B1 with outer core layer B2) then, in aqueous emulsion with a free-radical initiator (e.g. potassium persulfate) at temperatures of from 30° to 120°C, preferably from 40 to 100°C, more preferably 50 to 80°C, in a second graft reaction a second layer B3 (first graft shell layer) is prepared by addition and polymerization of at least one vinylaromatic monomer (e.g.styrene).

On this resultant graft copolymer latex (core (graft base) B1 with outer core layer B2 and graft shell layer B3) then, in aqueous emulsion with a free-radical initiator (e.g. potassium persulfate) at temperatures of from 30° to 120°C, preferably from 40 to 100°C, more preferably 50 to 80°C, in a third graft reaction a third layer B4 (second graft shell layer) is prepared by addition and polymerization of at least one vinylaromatic monomer B41 (e.g.styrene) and at least one nitrile monomer B42 (e.g. acrylonitrile) and optionally further comonomers.

The materials can be introduced in the form of a mixture, for example in the form of aqueous monomer emulsion.

If in one step of the production process two or more monomers are added, the monomers can be added individually or in mixtures with one another. Preferably the individual monomers are added simultaneously or in a mixture with one another.

To produce the graft polymer B it is preferable to use an inorganic peroxide salt, preferably inorganic persulfate salt, more preferably potassium peroxodisulfate, as free-radical initiator. It is also possible to use sodium peroxodisulfate and/or ammonium peroxodisulfate. It is also possible to use a redox initiator system, in particular comprising an organic peroxide and at least one reducing agent.

Suitable organic peroxides are those selected from the following group: di-tert-butyl peroxide, cumene hydroperoxide, tert-butyl hydroperoxide, and p-menthane hydroperoxide, and mixtures thereof.

The reducing agent used generally comprises at least one water-soluble compound which has reducing action and has been selected from the following group: salts of sulfinic acid, salts of sulfurous acid, sodium dithionite, sodium sulfite, sodium hyposulfite, sodium hydrogensulfite, ascorbic acid, and salts thereof, Rongalit C (sodium formaldehyde-sulfoxylate), mono- and dihydroxyacetone, sugars, iron(II) salts, tin(II) salts, and titanium(III) salts.

The amount of the free-radical initiator used, based on the total amount of monomer, is generally from 0.01 to 5% by weight, preferably from 0.1 to 3% by weight, and particularly preferably from 0.2 to 1.5% by weight.

The graft polymer (B) can be produced by emulsion polymerization, with use of a redox initiator system comprising cumene hydroperoxide, dextrose, and iron (III) salt, or with use of a peroxide, such as potassium peroxodisulfate.

The graft base B1 is produced via free-radical-initiated aqueous emulsion polymerization as hereinbefore described in presence of a seed polymer latex (S-B1), by adding the monomers within the aqueous reaction medium after initiation of the free-radical polymerization reaction. In another possible method, at least one portion of the free-radical polymerization initiator and optionally of other auxiliaries is used as initial charge in the aqueous reaction medium, the resultant aqueous reaction medium is brought to polymerization temperature, and, at that temperature, the monomers are added to the aqueous reaction medium.

In one preferred embodiment of the invention, a peroxodisulfate, in particular potassium peroxodisulfate, is used as free-radical initiator, in conjunction with other auxiliary components, when producing the graft base B1. It is possible inter alia to use a buffer (such as bicarbonate), and potassium stearate. Preferably an alkansulfonate sodium salt (commercially available as Mersolat® H95 or K30 from Lanxess) is used as soap (emulsifier).

By way of example, tert-dodecyl mercaptan can be used as molecular-weight regulator, and can be added continuously or else at various junctures during the process to produce the rubber latex.

The manner of addition of the regulator can have an effect on the properties of the final product. One preferred embodiment uses no regulator.

For the purposes of the polymerization process described, dispersing agents (DM) are also used, and these maintain dispersion not only of the monomer droplets but also of the polymer particles formed, within the aqueous medium, and thus ensure that the resultant aqueous polymer dispersion is stable.

Dispersing agents (DM) that can be used are not only the protective colloids conventionally used in carrying out free-radical aqueous emulsion polymerizations but also commercially available emulsifiers. Examples of suitable protective colloids are polyvinyl alcohols, polyalkylene glycols, alkali metal salts of polyacrylic acids and polymethacrylic acids, and gelatin derivatives. Examples of suitable protective colloids are copolymers comprising the following: acrylic acid, methacrylic acid, maleic anhydride, 2-acrylamido-2-methylpropanesulfonic acid, and/or 4-styrenesulfonic acid, and alkali metal salts of those copolymers.

Other suitable protective colloids are homo- and copolymers comprising the following: N-vinylpyrrolidone, N-vinylcaprolactam, N-vinylcarbazole, 1-vinylimidazole, 2-vinylimidazole, 2-vinylpyridine, 4-vinylpyridine, acrylamide, methacrylamide, aminated acrylates, methacrylates, acrylamides, and/or methacrylamides. There is also a detailed description of other suitable protective colloids in Houben-Weyl, "Methoden der organischen Chemie" [Methods of Organic Chemistry], volume XIV/1, Makromolekulare Stoffe [Macromolecular materials], Georg-Thieme-Verlag, Stuttgart, 1961, p. 411-420.

It is also possible to use mixtures of protective colloids and/or emulsifiers. The dispersing agents used frequently comprise exclusively emulsifiers, where the relative molecular weights of these, unlike those of the protective colloids, are usually below 1000. They can be either anionic, cationic, or nonionic. If a mixture of surfactant substances is used, the individual components should be mutually compatible. Anionic emulsifiers are generally compatible with one another and with nonionic emulsifiers.

The same also applies to cationic emulsifiers, whereas anionic and cationic emulsifiers should mostly not be combined with one another. An overview of suitable emulsifiers is found in Houben-Weyl, "Methoden der organischen Chemie", volume XIV/1, Makromolekulare Stoffe, Georg-Thieme-Verlag, Stuttgart, 1961, pages 192 to 208. Particular dispersing agents used in the invention are emulsifiers, such as anionic, cationic, or nonionic surfactants. Examples of familiar nonionic emulsifiers are oxylated mono-, di- and trialkylphenols, and also ethoxylated fatty alcohols.

Examples of conventional anionic emulsifiers are the alkali metal and ammonium salts of alkyl sulfates (having C8-C12-alkyl radicals), of sulfuric acid hemiesters of ethoxylated alkanols (alkyl radical: C12-C18), and of ethoxylated alkylphenols (alkyl radicals: C4-C12), and of alkylsulfonic acids (alkyl radical: C12-C18).

Preferred alkali metal salts of alkylsulfonic acids are alkansulfonate sodium salts which are commercially available as Mersolat® H95 or K30 from Lanxess (Germany).

Suitable cationic emulsifiers are inter alia phosphonium salts, sulfonium salts, tropylium salts, morpholinium salts, oxazolinium salts, imidazolinium salts, pyridinium salts, and primary, secondary, tertiary, or quaternary ammonium salts having C8-C18-alkyl, alkylaryl, or heterocyclic radicals. Examples of compounds are inter alia N-laurylpyridinium sulfate, N-cetylpyridinium sulfate, dodecylammonium acetate or the corresponding sulfate, and disulfates or acetates of the various paraffinic esters that involve 2-(N,N,N-trimethylammonium)ethyl radicals. The emulsifiers and protective colloids can also be used in the form of mixtures.

The total amount used of the emulsifiers preferred for use as dispersing agents is advantageously from 0.005 to 5% by weight, preferably from 0.01 to 5% by weight, in particular from 0.1 to 3% by weight, based in each case on the total concentration of monomer. The total amount of the protective colloids used as dispersing agents in addition to or instead of the emulsifiers is often from 0.1 to 10% by weight, and frequently from 0.2 to 7% by weight, based in each case on the total monomer concentration.

However, the dispersing agents used preferably comprise anionic and/or nonionic emulsifiers and particularly preferably comprise anionic emulsifiers.

Other polymerization auxiliaries that can be used during the polymerization reaction are the conventional buffer substances, which can adjust to pH values which are preferably from 6 to 11, examples being sodium bicarbonate and sodium pyrophosphate, and also from 0 to 3% by weight of a molecular-weight regulator, e.g. mercaptans, terpineols, or dimeric α-methylstyrene. The buffer substances can also have a complexing action.

The polymerization reaction can be carried out in the range from 20 to 170° C. Temperatures used are generally from 30 to 120° C, preferably 40 to 100°C, more preferably from 50 to 80° C.

Core B1 produced in the manner as described above is suitable as graft base for producing the graft copolymers (B).

An important parameter for graft copolymers is the graft yield, which is 100% in the case of complete grafting. Graft copolymers with maximum graft yield are advantageous for many applications, since these comprise only small amounts of free polymer derived from the monomers.

The polymer not bound to the rubber can have an adverse effect on the physical properties of the copolymer, and this is particularly noticeable in mixtures with other components.

Layers B2 to B4 are produced via an emulsion polymerization process as described hereinbefore. It is advantageous that these graft copolymerization reactions are again carried out in aqueous emulsion, under the conventional conditions described above, and the use of a redox initiator system has proven successful here.

The system in which the graft copolymerization reaction takes place to produce the layers B2 to B4 can be the same as that used for the emulsion polymerization reaction to produce the graft base (B1), and it is possible here, if necessary, to add further emulsifiers, and also auxiliaries. The monomers to be grafted onto the graft base B1 are added to the reaction mixture in at least three steps, preferably three steps, as described above in order to construct a graft copolymer B comprising (consisting of) a core B1 and three layers B2 to B4.

The degree of grafting (DG) is the amount of the monomers used for (graft shell) layers B3 and B4 divided by the total sum of the monomers used for the graft copolymer B.

The graft copolymerization is carried out in such a way as to give a degree of grafting of from 30 to 50 wt.-%, preferably 35 to 45 wt.-%. Since the graft yield (GY) is generally not 100%, the portion of the polymers actually grafted onto the material is smaller than the amount used. It follows from this that some free polymers are produced. One of the possible ways of controlling the graft yield during the graft polymerization reaction uses the metering rate of the monomers, or uses variables relating to the addition of initiator and of regulator. By way of example, addition of a larger amount of regulator (e.g. mercaptans) leads to a larger amount of free polymers.

The graft polymerization reaction can also be initiated by using graft-active and water-soluble redox systems. By way of example, conventional water-soluble initiators, e.g. potassium peroxodisulfate, sodium peroxodisulfate, ammonium peroxodisulfate, or hydrogen peroxide can be used together with at least one conventional reducing agent, e.g. sodium sulfite, sodium disulfite, sodium hydrogensulfite, sodium dithionite, ascorbic acid, sugar, or the sodium salt of hydroxymethanesulfonic acid, as redox system. In many instances, these redox systems give relatively large-particle dispersions. Particularly suitable redox catalysts with high graft activity are water-soluble initiator systems, e.g. redox systems made of hydrogen peroxide and heavy-metal ions, examples being the cerium salts, manganese salts, and iron(II) salts, as described by way of example in Houben-Weyl, "Methoden der organischen Chemie", 4th edition, volume E 20, p. 2168. Potassium peroxodisulfate is particularly suitable.

The conduct of the polymerization reaction can be such that the heavy-metal salt of the redox system, e.g. the iron(II) salt, is added to the mixture before the polymerization reaction begins, whereas the peroxide is metered in simultaneously with the monomers, but separately therefrom. Examples of concentrations used for the iron(II) salt are from 1 to 200 mg/l of Fe(II) ions, based on the entire dispersion, but higher and lower concentrations are also possible here.

There are various ways of introducing the redox initiator system, an example being addition in portions, as described in WO 2001/30901 or WO 2002/28931. The oxidant used preferably comprises cumene hydroperoxide (optionally in a mixture with cumene), where this is in particular introduced to some extent continuously and to some extent in portioned form (e.g. once).

Conventional initiators, such as oil-soluble or sparingly water-soluble organic peroxides or azo initiators can be used in addition to the redox initiators. By way of example, it is advantageous to add further reducing agents, these preferably being used as initial charge with the iron salt prior to the polymerization reaction. Examples of reducing agents that can be used are sodium sulfite, sodium disulfite, sodium hydrogensulfite, sodium dithionite, ascorbic acid, reducing sugars, and also the sodium salt of hydroxymethanesulfonic acid.

The molecular weight of the grafted-on polymer can also be adjusted via concomitant use of chain-transfer agents or of molecular-weight regulators (MR), e.g. n-dodecyl mercaptan, tert-dodecyl mercaptan, n-butyl mercaptan, or tert-butyl mercaptan. Odor-free regulators are also suitable, an example being terpineols, see also EP-A 1 191 044.

The polymerization reaction is frequently carried out at pH values of from 2.5 to 12, preferably at pH values of from 8 to 11. The pH value can be adjusted to the desired value prior to or during the polymerization reaction by using conventional acids, such as hydrochloric acid, sulfuric acid, or acetic acid, or else by using bases, such as sodium hydroxide solution, potassium hydroxide solution, ammonia, or ammonium carbonate. It is preferable to adjust the pH value of the aqueous polymer dispersion to from 7 to 11 after the polymerization reaction, via addition of sodium hydroxide solution, potassium hydroxide solution, or ammonia.

Thermoplastic molding composition

One further subject of the invention is a thermoplastic molding composition comprising a polymer mixture PM consisting of components A and B:

(A) 30 to 85 wt.-%, preferably 40 to 70 wt.-%, more preferably 55 to 65 wt.-%, of at least one thermoplastic copolymer A comprising (consisting of) at least one vinylaromatic monomer preferably styrene, A1, and at least one nitrile monomer, preferably acrylonitrile, A2;
(B) 15 to 70 wt.-%, preferably 30 to 60 wt.-%, more preferably 35 to 45 wt.-%, of at least one graft copolymer B as defined above;
where the sum of A and B adds up to 100 wt.-%.

In the thermoplastic molding composition of the invention, the fraction of the polymer mixture PM - consisting of components A and B - is generally 40 to 100 wt%, preferably 70 to 100 wt%, most preferably 80 to 100 wt%, based on the overall molding composition.

The thermoplastic molding composition of the invention may optionally further comprise at least one further graft copolymer C composed of an elastomeric, crosslinked acrylate polymer C1 as graft base C1 and at least one graft shell C2 made of a mixture comprising (consisting of) vinylaromatic monomers C2-1 and nitrile monomers C2-2.

The fraction of the graft copolymer C is generally 0 to 30 wt%, preferably 0 to 20 wt%, based on the overall molding composition. If polymer C is present in the molding composition, its minimum fraction is customarily 0.1 wt%.

Furthermore, the molding composition of the invention may optionally comprise additives and/or auxiliaries D. The fraction of the additives and/or auxiliaries D is generally 0 to 20 wt.-%, preferably 0 to 10 wt%, based on the overall molding composition. If additives and/or auxiliaries C are present in the molding composition, their minimum fraction is customarily 0.1 wt%.

The thermoplastic molding composition of the invention may optionally further comprise at least one further thermoplastic polymer E selected from aromatic polycarbonates and polyamides. The fraction of the polymer E can be up to 50 wt%, often up to 30 wt.-%, preferably up to 20 wt.-%, more preferably up to 10 wt.-%, based on the overall molding composition. If polymer E is present in the molding composition, its minimum fraction is customarily 0.1 wt%.

Molding compositions comprising no thermoplastic polymers E are preferred.

The sum of the polymer mixture PM - consisting of components A and B - and further optional components C, D and/or E present in the overall molding composition adds up to 100 wt%.

According to one embodiment of the invention the molding composition comprises (or consists of):

40 to 100 wt.-% of a polymer mixture PM consisting of components A and B as defined above;

0 to 30 wt.-% of at least one further graft copolymer C composed of an elastomeric, crosslinked acrylate polymer C1 (= graft base C1) and at least one graft shell C2, which is obtained via emulsion polymerization in the presence of at least one graft base C1, which graft shell C2 is made of a mixture comprising at least one vinylaromatic monomer C2-1 and at least one nitrile monomer C2-2;

0 to 20 wt.-% of additives and/or auxiliaries D; and

0 to 50 wt.-% of at least one further thermoplastic polymer E selected from aromatic polycarbonates and polyamides; based in each case on the overall molding composition, and where the sum of PM, and optional components C, D and/or E adds up to 100 wt%.

According to one further embodiment of the invention the afore-mentioned molding composition comprises (or consists of):

70 to 100 wt.-%, preferably 80 to 100 wt.-% of a polymer mixture PM;

0 to 30 wt.-%, preferably 0 to 20 wt.-%, of at least one further graft copolymer C;

0 to 15 wt.-%, preferably 0 to 5 wt.-%, of additives and/or auxiliaries D; and

0 to 30 wt.-%, preferably 0 to 20 wt.-%, of at least one further thermoplastic polymer E; based in each case on the overall molding composition, and where the sum of PM, and optional components C, D and/or E adds up to 100 wt%.

Often molding compositions of the invention comprise (or consist of):

80 to 99.9 wt.-%, preferably 85 to 99.9 wt.-%, more preferably 95 to 99.5 wt.-%, of a polymer mixture PM consisting of components A and B as defined above; and

0.1 to 20 wt.-%, preferably 0.1 to 15 wt.-%, more preferably 0.5 to 5 wt.-%, of additives and/or auxiliaries D; and based in each case on the overall molding composition, where the sum of PM, and component D adds up to 100 wt.-%.

Component A

The thermoplastic copolymer A is a rubber free resin.

Amounts used of component A are from 30 to 85 wt.-%, preferably 40 to 70 wt.-%, more preferably 55 to 65 wt.-%. Suitable vinylaromatic monomers A1 are styrene and styrene derivatives such as $\alpha$-methylstyrene and ring-alkylated styrenes, for example p-methylstyrene. It is preferable to use styrene or $\alpha$-methylstyrene, and in particular styrene. Preferred nitrile monomers A2 used are acrylonitrile and/or methacrylonitrile, preferably acrylonitrile.

The proportion of the vinylaromatic monomer (such as styrene) A1 in the copolymer A is generally from 65 to 75% by weight, preferably from 66 to 68% by weight, often about 67% by weight. The proportion of the nitrile monomer A2 in the copolymer A is generally from 20 to 35% by weight, preferably 25 to 35 wt.-%, more preferably from 30 to 34% by weight, often 32 to 34 % by weight.

It being possible for vinylaromatic monomers A1, in particular styrene, and/or nitrile monomers A2, in particular acrylonitrile, to be replaced partially (up to 30 wt.-%, preferably up to 20 wt.-%, more preferably up to 15 wt.-%) by other copolymerizable monomers preferably such as methyl methacrylate, N-phenylmaleimide and/or maleic anhydride, preference is given to methyl methacrylate and/or maleic anhydride.

The molecular weight MW of copolymer A ranges preferably from 20,000 to 200,000 g/mol. The intrinsic viscosity [$\eta$] of the thermoplastic copolymer A is preferably from 20 to 110 ml/g (determined in DMF at 25 °C). The viscosity number VN of copolymer A is preferably from 50 to 100 cm$^3$/g, more preferably from 55 to 85 g/cm$^3$ (determined according to DIN 53726).

Copolymer A is preferably a copolymer of styrene and acrylonitrile. This SAN copolymer is often produced with (about) 67% by weight of styrene and (about) 33% by weight of AN. The molar mass of the SAN copolymer A is often in the range (Mw) from 120,000 to 180,000 g/mol, measured by conventional methods known to the person skilled in the art, e.g. gel permeation chromatography (GPC).

Copolymer A can be produced by well-known methods (DE-A 31 49 358 and DE-A 32 27 555), for example by well-known bulk, solution, suspension, or aqueous emulsion copolymerization at conventional temperatures in known apparatuses.

Further suitable in accordance with the invention as copolymer A are also $\alpha$-methylstyrene-acrylonitrile copolymers, styrene-acrylonitrile-maleic anhydride copolymers, styrene-acrylonitrile-phenylmaleimide copolymers, $\alpha$-methylstyrene-acrylonitrile-methyl methacrylate copolymers, $\alpha$-methylstyrene-acrylonitrile-tert-butyl methacrylate copolymers, and styrene-acrylonitrile-tert-butyl methacrylate copolymers.

Component C

Graft copolymer C is different from graft copolymer B.

Graft copolymer C is composed of an elastomeric, crosslinked acrylate polymer C1 (= graft base C1) and at least one graft shell C2, which is obtained via emulsion polymerization in the presence of at least one graft base C1, which graft shell C2 is made of a mixture comprising (consisting of) at least one vinylaromatic monomer C2-1 and at least one nitrile monomer C2-2.

Preferably graft copolymer C is composed of

C1: 50 to 80 wt.-%, preferably 60 to 70 wt.-%, based on C, of graft base C1, an elastomeric, crosslinked acrylate polymer C1;

C2: 20 to 50 wt.-%, preferably 30 to 40 wt.-%, based on C, of at least one graft shell C2, which is obtained via emulsion polymerization in the presence of at least one graft base C1, which graft shell C2 is made of a mixture comprising (consisting of) at least one vinylaromatic monomer C2-1 and at least one nitrile monomer C2-2, where the amount of C2-2, based on the total amount of C2, is 20 to 35 wt.-%, preferably 22 to 30 wt.-%.

More preferably graft copolymer C is composed of

C1: 50 to 80 wt.-%, preferably 60 to 70 wt.-%, based on C, of at least one graft base C1, an elastomeric, crosslinked acrylate polymer C1, made from 95 to 99.9 wt.-%, preferably 97.5 to 99.9 wt.-%, of at least one C2-C8-alkyl acrylate, preferably C2-C4-alkyl acrylate, more preferably butyl acrylate, and from 0.1 to 5 wt.-%, preferably 0.1 to 2.5 wt.-%, of at least one crosslinking bi- or polyfunctional comonomer having at least two olefinic double bonds, in particular DCPA and/or AMA;

C2: 20 to 50 wt.-%, preferably 30 to 40 wt.-%, based on C, of at least one graft shell C2, which is obtained via emulsion polymerization in the presence of at least one graft base C1, which graft shell is made of a mixture of comprising (consisting of) at least one vinylaromatic monomer, in particular styrene, C2-1 and at least one nitrile monomer, in particular acrylonitrile, C2-2, where the amount of C2-2, based on the total amount of C2, is 20 to 35 wt.-%, preferably 22 to 30 wt.-%.

According to a first embodiment the afore-mentioned graft copolymer C has one graft shell C2 consisting of only one layer (= single layer) made of a mixture comprising (consisting of) at least one vinylaromatic monomer, in particular styrene, C2-1 and at least one nitrile monomer, in particular acrylonitrile, C2-2.

According to this first embodiment the weight average particle diameter $d_w$ of the graft base C1 can be within wide ranges such as 60 to 700 nm, often in the range of from 80 to 550 nm, preferably 380 to 700 nm, more preferably 400 to 550 nm.

Graft copolymers C according to this first embodiment and their preparation are known and described in the prior art (e.g. EP 0006503 A1).

According to a second embodiment the afore-mentioned graft copolymer C has one graft shell C2 consisting of a first layer C21 made from at least one vinylaromatic monomer, in particular styrene, and a second layer C22 made of a mixture comprising (consisting of) at least one vinylaromatic monomer, in particular styrene, C22-1, and at least one nitrile monomer, in particular acrylonitrile, C22-2, where the amount of C22-2, based on the total amount of C22, is 20 to 35 wt.-%, preferably 22 to 30 wt.-%, and wherein the weight average particle diameter $d_w$ of the graft base C1 is in the range of from 300 to 700 nm, preferably 380 to 650 nm, more preferably 400 to 600 nm.

The fraction of the first layer C21 - based on the total amount of C2 - generally is 10 to 35 wt.-%, preferably 15 to 33 wt.-%.

Graft copolymers C according to this second embodiment and their preparation are known and described in the prior art (e.g. US 2016/0297957, graft copolymer B). Suitable acrylates c11 which can be used for the preparation of the graft base polymer C1 are C2-C8-alkyl acrylates. Up to 30 wt.-%, preferably up to 20 wt.-%, more preferably up to 10 wt.-% of the acrylate monomers c11 may be partially replaced by comonomers c12 as mentioned for b12 above.

Elastomeric, crosslinked acrylate polymer C1 (= graft base C1) is preferably made of from 95 to 99.9 wt.-%, preferably 97.5 to 99.9 wt-5, of at least one C2-C8-alkyl acrylate, preferably C2-C4-alkyl acrylate, more preferably butyl acrylate, and from 0.1 to 5 wt.-%, preferably 0.1 to 2.5 wt.-%, of at least one crosslinking bi- or polyfunctional comonomer having at least two olefinic double bonds, in particular DCPA and/or AMA.

The alcohol component of the C2-C8-alkyl acrylate can be of linear or branched structure, a linear structure is preferred.

Particularly suitable are C2-C8-alkyl acrylates, in particular ethyl acrylate, 2-ethylhexyl acrylate, and n-butyl acrylate. Preference is given to 2-ethylhexyl acrylate and n-butyl acrylate, and very particular preference is given to n-butyl acrylate. It is also possible to use a mixture of various C2-C8-alkyl(meth)acrylates differing in their alkyl radical. Preferably one C2-C8-alkyl acrylate, more preferably one C2-C4-alkyl acrylate, most preferably n-butyl acrylate is used.

The rubbery graft base C1 moreover comprises at least one crosslinking monomer. Such monomers are bi- or polyfunctional comonomers as described above for graft base B1. Particular preference is given to DCPA and also to AMA.

The crosslinking comonomer, in particular DCPA, is often used in amounts of from 0.1 to 5 wt.-%, preferably 0.1 to 2.5 wt.-%, based on B1. It is possible to use two crosslinking agents, but preferable to use only one.

Component D

The molding composition of the invention may optionally comprise additives and/or auxiliaries (processing aids) D such as stabilizers, oxidation retarders, agents to counter thermal decomposition and decomposition due to ultraviolet light, lubricants and mold release agents, colorants such as dyes and pigments, fibrous and pulverulent fillers and reinforcing agents, nucleating agents, plasticizers, etc.; the fraction thereof being in general not more than 20 wt.-%, preferably not more than 10 wt.-%, more preferably not more than 8 wt.-%.

Examples of oxidation retarders and heat stabilizers are halides of the metals from group I of the periodic table, examples being sodium, potassium and/or lithium halides, optionally in combination with copper(I) halides, e.g., chlorides, bromides, iodides, sterically hindered phenols, hydroquinones, different substituted representatives of these groups, and mixtures thereof, in concentrations of up to 1 wt%, based on the weight of the thermoplastic molding composition.

UV stabilizers, used generally in amounts of up to 2 wt%, based on the molding composition, include various substituted resorcinols, salicylates, benzotriazoles, and benzophenones.

Furthermore, organic dyes may be added, such as nigrosine, pigments such as titanium dioxide, phthalocyanines, ultramarine blue, and carbon black as colorants, and also fibrous and pulverulent fillers and reinforcing agents. Examples of the latter are carbon fibers, glass fibers, amorphous silica, calcium silicate (wollastonite), aluminum silicate, magnesium carbonate, kaolin, chalk, powdered quartz, mica, and feldspar. The fraction of such fillers and colorants is generally up to 20 wt%, preferably up to 10 wt%.

Examples of nucleating agents that can be used are talc, calcium chloride, sodium phenylphosphinate, aluminum oxide, silicon dioxide, and nylon 22.

Examples of lubricants and mold release agents, which can be used in general in amounts up to 2 wt.-%, preferably 0.5 to 1.5 wt.-%, are long-chain fatty acids such as stearic acid or behenic acid, their salts (e.g., Ca or Zn stearate) or esters (e.g., stearyl stearate or pentaerythrityl tetrastearate), and also amide derivatives (e.g., ethylene-bisstearylamide). For better processing, mineral-based antiblocking agents may be added in amounts up to 0.1 wt% to the molding compositions of the invention. Examples include amorphous or crystalline silica, calcium carbonate, or aluminum silicate.

Processing aids which can be used are, for example, mineral oil, preferably medical white oil, in amounts up to 5 wt%, preferably up to 2 wt%.

Examples of plasticizers include dioctyl phthalate, dibenzyl phthalate, butyl benzyl phthalate, hydrocarbon oils, N-(n-butyl)benzenesulfonamide, and o- and p-tolylethylsulfonamide.

For further improving the resistance to inflammation, it is possible to add all of the flame retardants known for the thermoplastics in question, more particularly those flame retardants based on phosphorus compounds and/or on red phosphorus itself.

Component E

The molding composition of the invention may further comprise at least one further polymer E selected from aromatic polycarbonates and polyamides.

Suitable aromatic polycarbonates are known per se. They are obtainable, for example, in accordance with the processes of DE-B-1 300 266, by interfacial polycondensation, or the process of DE-A 14 95 730, by reaction of biphenyl carbonate with bisphenols. A preferred bisphenol is 2,2-di(4-hydroxyphenyl)propane, referred to generally - and also below - as bisphenol A.

In place of bisphenol A it is also possible to use other aromatic dihydroxy compounds, especially 2,2-di(4-hydroxyphenyl)pentane, 2,6-dihydroxynaphthalene, 4,4'-dihydroxydiphenyl sulfone, 4,4'-dihydroxydiphenyl ether, 4,4'-dihydroxydiphenyl sulfite, 4,4'-dihydroxydiphenylmethane, 1,1-di(4-hydroxyphenyl)ethane or 4,4-dihydroxybiphenyl, and also mixtures of the aforesaid dihydroxy compounds.

Particularly preferred polycarbonates are those based on bisphenol A or bisphenol A together with up to 30 mol% of the aforementioned aromatic dihydroxy compounds.

The relative viscosity of these polycarbonates is generally in the range from 1.1 to 1.5, more particularly 1.28 to 1.4 (noted at 25°C in a 0.5 wt% strength solution in dichloromethane).

Partially crystalline, preferably linear polyamides such as polyamide 6, polyamide 6,6, polyamide 4,6, polyamide 6,12, and partially crystalline copolyamides based on these components are suitable. It is further possible to use partially crystalline polyamides whose acid component consists wholly or partly of adipic acid and/or terephthalic acid and/or isophthalic acid and/or suberic acid and/or sebacic acid and/or azelaic acid and/or dodecanedicarboxylic acid and/or a cyclohexanedicarboxylic acid, and whose diamine component consists wholly or partly in particular of m- and/or p-xylylenediamine and/or hexamethylenediamine and/or 2,2,4- and/or 2,4,4-trimethylhexamethylenediamine and/or isophoronediamine, and whose compositions are known in principle (cf. Encyclopedia of Polymers, vol. 11, p. 315 ff.).

The molecular weight Mn (number average) of the polyamides suitable as component B are preferably in the range between 5000 and 100 000, more preferably between 10 000 and 80 000. Suitability is possessed by partially crystalline linear polyamides, for example, having a relative viscosity of 2.2 to 4.5, measured in 0.5% strength solution (0.5 g/l00 ml) in 96 wt% strength sulfuric acid at 25°C. Preferred polyamides are those deriving wholly or partly from lactams having 7 to 13 ring members, such as polycaprolactam, polycaprylyllactam or polyurolactam.

Further suitable are polyamides obtained by reacting dicarboxylic acids with one or more diamines. Examples of suitable dicarboxylic acids are alkanedicarboxylic acids having 6 to 12, especially 6 to 10, carbon atoms, especially adipic acid. Examples of suitable diamines are alkane- or cycloalkanediamines having 4 to 12, especially 4 to 8, carbon atoms; hexamethylenediamine, m-xylylenediamine, bis(4-aminophenyl)-methane, bis(4-aminocyclohexyl)methane or 2,2-bis(4-aminophenyl)propane, or mixtures thereof, are particularly suitable partners for preparing such polyamides. It may be advantageous to prepare the stated polyamides per se and to use mixtures thereof.

Of particular technical significance are polyamide 6 (polycaprolactam), polyamide 6,6 (polyhexamethyleneadipamide), and polyamides composed of at least 80 wt% of repeating units of the formula -[-NH-(CH2)4-NH-CO-(CH2)4-CO-)-. The last-mentioned polyamides are obtainable by condensing 1,4-diaminobutane with adipic acid. Suitable preparation processes for polyamides are described for example in EP-A 38 094, EP-A 38 582, and EP-A 39 524.

Likewise suitable are polyamides with a small fraction, preferably up to about 10 wt%, of other cocondensable constituents, especially other amide formers such as, for example, a,w-amino acids or N-carboxylic anhydrides (Leuchs anhydrides) of amino acids.

The molding compositions of the invention may further comprise as component E a partially aromatic copolyamide with the construction described below.

Preferred partially aromatic copolyamides E contain 40 to 90 wt% of units deriving from terephthalic acid and hexamethylenediamine. A small fraction of the terephthalic acid, preferably not more than 10 wt% of the total amount of aromatic dicarboxylic acids used, may be replaced by isophthalic acid or other aromatic dicarboxylic acids, preferably those in which the carboxyl groups are in para position.

Besides the units deriving from terephthalic acid and hexamethylenediamine, the partially aromatic copolyamides contain units which derive from ε-caprolactam and/or units which derive from adipic acid and hexamethylenediamine. The fraction of units deriving from ε-caprolactam is up to 50 wt%, preferably 20 to 50 wt%, especially 25 to 40 wt%, while the fraction of units deriving from adipic acid and hexamethylenediamine is up to 60 wt%, preferably 30 to 60 wt%, and especially 35 to 55 wt%.

The copolyamides may also contain both units of ε-caprolactam and units of adipic acid and hexamethylenediamine; in this case, the fraction of units which are free from aromatic groups is preferably at least 10 wt%, more preferably at least 20 wt%.

The ratio of the units deriving from e-caprolactam and from adipic acid and hexamethylenediamine is not subject to any particular restriction here.

The melting point of particularly suitable partially aromatic copolyamides is situated for example in the range from 260 to more than 300°C, this high melting point also being associated with a high glass transition temperature of generally more than 75°C, especially more than 85°C. Binary copolyamides based on terephthalic acid, hexamethylenediamine, and ε-caprolactam, for a content of about 70 wt% of units deriving from terephthalic acid and hexamethylenediamine, have a melting point in the range of 300°C and a glass transition temperature of more than 110°C. Binary copolyamides based on terephthalic acid, adipic acid, and hexamethylenediamine reach a melting point of 300°C or more at a level of just about 55 wt% of units of terephthalic acid and hexamethylenediamine, with the glass transition temperature being not quite as high as for binary copolyamides which comprise ε-caprolactam in place of adipic acid or adipic acid/hexamethylenediamine.

Suitable partially aromatic copolyamides can be prepared by the processes described in EP-A 129 195 and EP-A 129 196.

Preparation of the thermoplastic molding composition

The thermoplastic molding compositions of the invention may be produced from components A and B (and optionally further components C, D and/or E) by all known methods.

The graft polymers B are mixed with the copolymer A and, where present, with the further components C, D and/or E in a mixing apparatus, producing a substantially liquid-melt polymer mixture.

"Substantially liquid-melt" means that the polymer mixture, as well as the predominant liquid-melt (softened) fraction, may further comprise a certain fraction of solid constituents, examples being unmelted fillers and reinforcing material such as glass fibers, metal flakes, or else unmelted pigments, colorants, etc. "Liquid-melt" means that the polymer mixture is at least of low fluidity, therefore having softened at least to an extent that it has plastic properties.

Mixing apparatuses used are those known to the skilled person. Components A and B, and - where included - C, D and/or E may be mixed, for example, by joint extrusion, kneading, or rolling, the aforementioned components necessarily having been isolated from the aqueous dispersion or from the aqueous solution obtained in the polymerization.

Where one or more components in the form of an aqueous dispersion or of an aqueous or nonaqueous solution are mixed in, the water and/or the solvent is removed from the mixing apparatus, preferably an extruder, via a degassing unit.

Examples of mixing apparatus for implementing the method includes discontinuously operating, heated internal kneading devices with or without RAM, continuously operating kneaders, such as continuous internal kneaders, screw kneaders with axially oscillating screws, Banbury kneaders, furthermore extruders, and also roll mills, mixing roll mills with heated rollers, and calenders. A preferred mixing apparatus used is an extruder. Particularly suitable for melt extrusion are, for example, single-screw or twin-screw extruders. A twin-screw extruder is preferred.

In some cases the mechanical energy introduced by the mixing apparatus in the course of mixing is enough to cause the mixture to melt, meaning that the mixing apparatus does not have to be heated. Otherwise, the mixing apparatus is generally heated. The temperature is guided by the chemical and physical properties of components A and B and - when present - C, D and/or E, and should be selected such as to result in a substantially liquid-melt polymer mixture. On the other hand, the temperature is not to be unnecessarily high, in order to prevent thermal damage of the polymer mixture. The mechanical energy introduced may, however, also be high enough that the mixing apparatus may even require cooling. Mixing apparatus is operated customarily at 160 to 400, preferably 180 to 300°C, more preferably 220 to 250°C.

In one preferred embodiment the mixing of the graft polymer B and - if present - graft copolymer C - with the copolymer A and, where included, with the further components D and/or E takes place in an extruder, with the dispersion of the graft polymer B and - if present - graft copolymer C, being metered directly into the extruder, without prior removal of the dispersion water. The water is customarily removed along the extruder via suitable degassing facilities.

Degassing facilities used may be, for example, degassing vents which are provided with retention screws (preventing the emergence of the polymer mixture).

In another, likewise preferred embodiment, the mixing of the aforementioned components takes place in an extruder, with the graft polymer B, and if present graft copolymer C, being separated beforehand from the dispersion water. As a result of this prior removal of the dispersion water, water-moist graft polymers B (and optionally graft polymers C) are obtained which have a residual water content of up to 60 wt%, based on B (or C). The residual water present may then be removed in vapor form as described above via degassing facilities in the extruder. With particular preference, however, the residual water in the extruder is not removed solely as steam; instead, a part of the residual water is removed mechanically in the extruder and leaves the extruder in the liquid phase. In the case of this so-called squeeze method (EP-B 0 993 476, pp. 13-16), the same extruder is supplied with the copolymer A and - where present - components D and/or E, meaning that the product of the method extruded is the completed molding composition.

The graft copolymers B according to the invention and in particular molding compositions according to the invention provide a good impact strength as well as a low opacity allowing an improved colorability and thus making them valuable raw materials for numerous applications.

The invention further provides shaped articles produced from the polymer molding compositions of the invention. The thermoplastic molding compositions of the invention can by way of example be pelletized or granulated, or processed to give shaped articles of any type, for example cable sheathing, films, hoses, fibers, profiles, shoe shells, technical moldings (such as motor vehicle parts), consumer items, and coatings, for example by extrusion, injection molding, blow molding or calendering.

A further subject of the invention is the use of graft copolymers B according to the invention and in particular the use of thermoplastic molding compositions according to the invention in the automotive industry, for building and construction, toys and leisure.

The invention is further illustrated by the examples and claims.

Examples

Synthesis of Graft Copolymer B

Seed Latex S-B1:

The reaction vessel is charged with 90.2 parts of demineralized water, 0.61 parts of the sodium salt of a C12- to C18- paraffin sulfonic acid and 0.23 parts sodium bicarbonate. When the temperature in the reaction vessel reaches 59 °C 0.18 parts of potassium persulfate, dissolved in 5 parts of demineralized water, are added. A mixture of 59.51 parts butyl acrylate and 1.21 parts tricyclodecenylacrylate is added within a period of 210 min. Afterwards the reaction is continued for 60 min. Finally the polymer dispersion has a total solid content of 39.6 % and the latex particles have a particle diameter $d_w$ of 75 nm (determined by turbidity).

Polystyrene latex (= Graft base) B1-1

The reaction vessel charged with 44.97 parts of demineralized water, 0.08 parts of sodium bicarbonate and 1.75 parts of latex S-B1. When the reaction mixture is heated to 75 °C a mixture of 1.03 parts of styrene and 0.02 parts of tricyclodecenylacrylate is dosed under stirring within 10 min. The reaction mixture is heated and stirred for another 45 min. Afterwards a mixture of 19.55 parts of styrene and 0.4 parts of tricyclodecenylacrylate is added within 200 min under stirring at 75 °C. In parallel a solution of 0.06 parts of potassium persulfate and 0.34 parts of the sodium salt of a C12- to C18-paraffin sulfonic acid in 4.13 parts of demineralized water are added to the reaction mixture within 200 min. The reaction mixture is stirred at 75 °C for another 120 min. Finally the polymer dispersion has a total solid content of 30.78 wt.-% and a particle diameter $d_w$ of 180 nm (determined by turbidity).

Polystyrene latex (= Graft base) B1-2

The reaction vessel charged with 44.97 parts of demineralized water, 0.08 parts of sodium bicarbonate and 1.18 parts of seed latex S-B1. When the reaction mixture is heated to 75 °C a mixture of 1.03 parts of styrene and 0.02 parts of tricyclodecenylacrylate is dosed under stirring within 10 min. The reaction mixture is heated and stirred for another 45 min. Afterwards a mixture of 19.55 parts of styrene and 0.4 parts of tricyclodecenylacrylate is added within 200 min under stirring at 75 °C. In parallel a solution of 0.06 parts of potassium persulfate and 0.3 parts of the sodium salt of a C12- to C18- paraffin sulfonic acid in 4.13 parts of demineralized water are added to the reaction mixture within 200 min. The reaction mixture is stirred at 75 °C for another 120 min. Finally the polymer dispersion has a total solid content of 30.24 wt.-% and a particle diameter $d_w$ of 206 nm (determined by turbidity).

Polystyrene latex (= Graft base) B1-3

The reaction vessel charged with 44.97 parts of demineralized water, 0.08 parts of sodium bicarbonate and 6.36 parts of seed latex S-B1. When the reaction mixture is heated to 75 °C a mixture of 1.03 parts of styrene and 0.02 parts of tricyclodecenylacrylate is dosed under stirring within 10 min. The reaction mixture is heated and stirred for another 45 min. Afterwards a mixture of 19.55 parts of styrene and 0.4 parts of tricyclodecenylacrylate is added within 200 min under stirring at 75 °C. In parallel a solution of 0.06 parts of potassium persulfate and 0.3 parts of the sodium salt of a C12- to C18- paraffin sulfonic acid in 4.13 parts of demineralized water are added to the reaction mixture within 200 min. The reaction mixture is stirred at 75 °C for another 120 min. Finally the polymer dispersion has a total solid content of 32.15 wt.-% and a particle diameter $d_w$ of 116 nm (determined by turbidity).

Polystyrene latex (= Graft base) B1-4

The reaction vessel charged with 44.97 parts of demineralized water, 0.08 parts of sodium bicarbonate and 0.39 parts of seed latex S-B1. When the reaction mixture is heated to 75 °C a mixture of 1.03 parts of styrene and 0.02 parts of tricyclodecenylacrylate is dosed under stirring within 10 min. The reaction mixture is heated and stirred for another 45 min. Afterwards a mixture of 19.55 parts of styrene and 0.4 parts of tricyclodecenylacrylate is added within 200 min under stirring at 75 °C. In parallel a solution of 0.06 parts of potassium persulfate and 0.3 parts of the sodium salt of a C12- to C18- paraffin sulfonic acid in 4.13 parts of demineralized water are added to the reaction mixture within 200 min. The reaction mixture is stirred at 75 °C for another 120 min. Finally the polymer dispersion has a total solid content of 29.26 wt.-% and a particle diameter $d_w$ of 300 nm (determined by turbidity).

Polystyrene latex (= Graft base) B1-5

The reaction vessel charged with 44.97 parts of demineralized water, 0.08 parts of sodium bicarbonate and 1.68 parts of seed latex S-B1. When the reaction mixture is heated to 75 °C a mixture of 20.35 parts of styrene and 0.631 parts of tricyclodecenylacrylate is added within 292 min under stirring at 75 °C. In parallel a solution of 0.06 parts of potassium persulfate and 0.34 parts of the sodium salt of a C12- to C18-paraffin sulfonic acid in 4.13 parts of demineralized water are added to the reaction mixture within 200 min. The reaction mixture is stirred at 75 °C for another 60 min. Finally the polymer dispersion has a total solid content of 30.67 wt.-% and a particle diameter $d_w$ of 183 nm (determined by turbidity).

Graft copolymers B

Component B-1 (non-inventive):

The reaction vessel is charged with 70.66 parts of demineralized water, 0.96 parts of seed latex S-B1 and 0.23 parts of sodium bicarbonate. After heating the reaction vessel to 60 °C, 0.18 parts of potassium persulfate, dissolved in 5 parts demineralized water, are added to the reaction mixture. A mixture of 59.51 parts butyl acrylate and 1.21 parts tricyclodecenylacrylate is added within a period of 210 min. In parallel to the first feed a solution of 0.36 parts of the sodium salt of a C12- to C18- paraffin sulfonic acid in 16.6 parts demineralized water is also added over a period of 190 min. After 200 min, from starting the feed, the temperature is ramped to 65 °C. Afterwards the reaction is continued for 60 min at 65 °C. Finally the polymer dispersion has a total solid content of 39.76 % and the latex particles have a particle diameter $d_w$ of 304 nm (determined by turbidity).

An amount of 154.84 parts of the obtained acrylate rubber basic latex ($d_w$ 304 nm) is added to the reaction vessel together with 88.3 parts of demineralized water, 0.15 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 4 parts styrene are added at a temperature of 61 °C, followed by a post polymerization time of 30 min, where the temperature is increased from 61 to 65 °C. Then a mixture of 27.36 parts of styrene and 8.64 parts of acrylonitrile are added to the reaction over a period of 180 min. The reaction is continued at 65 °C for another 90 min. A polymer dispersion with a total solid content of 35.5 % is obtained. The latex particles have a diameter $d_w$ of 360 nm (determined by turbidity).

Component B-2:

The reaction vessel is charged with 40 parts of demineralized water and 50 parts of polystyrene latex B1-1. After heating the reaction vessel to 60 °C, 0.27 parts of potassium persulfate and 0.324 parts of sodium bicarbonate, dissolved in 6.173 parts demineralized water, are added to the reaction mixture. A mixture of 44.307 parts butyl acrylate and 0.693 parts tricyclodecenylacrylate is added within a period of 210 min. In parallel to the first feed a solution of 0.283 parts of the sodium salt of a C12- to C18-paraffin sulfonic acid in 14.49 parts demineralized water is also added over a period of 190 min. Afterwards the reaction is continued for 180 min at 60 °C. Finally the polymer dispersion has a total solid content of 39.26 % and the latex particles have a particle diameter $d_w$ of 303 nm (determined by turbidity).

An amount of 156.54 parts of said obtained basic latex ($d_w$ of 303 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 4 parts styrene are added at a temperature of 61 °C, followed by a post polymerization time of 30 min, where the temperature is increased from 61 to 65 °C. Then a mixture of 27.36 parts of styrene and 8.64 parts of acrylonitrile are added to the reaction over a period of 180 min. The reaction is continued at 65 °C for another 90 min. A polymer dispersion with a total solid content of 37.31 % is obtained. The latex particles have a diameter $d_w$ 349 nm (determined by turbidity).

Component B-3 (non-inventive):

The reaction vessel is charged with 40 parts of demineralized water and 66.7 parts of polystyrene latex B1-2. After heating the reaction vessel to 60 °C, 0.27 parts of potassium persulfate and 0.324 parts of sodium bicarbonate, dissolved in 6.173 parts demineralized water, are added to the reaction mixture. A mixture of 39.384 parts butyl acrylate and 0.616 parts tricyclodecenylacrylate is added within a period of 210 min. In parallel to the first feed a solution of 0.283 parts of the sodium salt of a C12- to C18-paraffin sulfonic acid in 14.49 parts demineralized water is also added over a period of 190 min. Afterwards the reaction is continued for 180 min at 60 °C. Finally the polymer dispersion has a total solid content of 37.06 % and the latex particles have a particle diameter $d_w$ of 318 nm (determined by turbidity).

An amount of 151.53 parts of said obtained basic latex ($d_w$ of 318 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 4 parts styrene are added at a temperature of 61 °C, followed by a post polymerization time of 30 min, where the temperature is increased from 61 to 65 °C. Then a mixture of 27.36 parts of styrene and 8.64 parts of acrylonitrile are added to the reaction over a period of 180 min. The reaction is continued at 65 °C for another 90 min. A polymer dispersion with a total solid content of 36.11 % is obtained. The latex particles have a diameter $d_w$ 357 nm (determined by turbidity).

Component B-4 (non-inventive):

The reaction vessel is charged with 40 parts of demineralized water and 50 parts of polystyrene latex B1-3. After heating the reaction vessel to 60 °C, 0.27 parts of potassium persulfate and 0.324 parts of sodium bicarbonate, dissolved in 6.173 parts demineralized water, are added to the reaction mixture.

A mixture of 44.307 parts butyl acrylate and 0.693 parts tricyclodecenylacrylate is added within a period of 210 min. In parallel to the first feed a solution of 0.446 parts of the sodium salt of a C12- to C18- paraffin sulfonic acid in 14.49 parts demineralized water is also added over a period of 190 min. Afterwards the reaction is continued for 180 min at 60 °C. Finally the polymer dispersion has a total solid content of 39.68 % and the latex particles have a particle diameter $d_w$ of 188 nm (determined by turbidity).

An amount of 151.53 parts of said obtained basic latex ($d_w$ 188 nm) is added to the reaction vessel together with 70 parts of demineralized water, 0.09 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min a mixture of 4 parts styrene and 2.4 parts of acrylonitrile is added at a temperature of 61 °C, followed by a post polymerization time of 30 min, where the temperature is increased from 61 to 65 °C. Then a mixture of 27.36 parts of styrene and 8.64 parts of acrylonitrile are added to the reaction over a period of 180 min. The reaction is continued at 65 °C for another 90 min. A polymer dispersion with a total solid content of 37.47 % is obtained. The latex particles have a diameter $d_w$ of 222 nm (determined by turbidity).

Component B-5 (non-inventive):

The reaction vessel is charged with 40 parts of demineralized water and 50 parts of polystyrene latex B1-4. After heating the reaction vessel to 60 °C, 0.27 parts of potassium persulfate and 0.324 parts of sodium bicarbonate, dissolved in 6.173 parts demineralized water, are added to the reaction mixture. A mixture of 44.307 parts butyl acrylate and 0.693 parts tricyclodecenylacrylate is added within a period of 210 min. In parallel to the first feed a solution of 0.176 parts of the sodium salt of a C12- to C18-paraffin sulfonic acid in 14.49 parts demineralized water is also added over a period of 190 min. Afterwards the reaction is continued for 180 min at 60 °C. Finally the polymer dispersion has a total solid content of 38.29 % and the latex particles have a particle diameter $d_w$ of 477 nm (determined by turbidity).

An amount of 151.53 parts of said obtained basic latex ($d_w$ 477 nm) is added to the reaction vessel together with 70 parts of demineralized water, 0.04 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 4 parts styrene are added at a temperature of 61 °C, followed by a post polymerization time of 30 min, where the temperature is increased from 61 to 65 °C. Then a mixture of 27.36 parts of styrene and 8.64 parts of acrylonitrile are added to the reaction over a period of 180 min. The reaction is continued at 65 °C for another 90 min. A polymer dispersion with a total solid content of 36.86 % is obtained. The latex particles have a diameter $d_w$ of 540 nm (determined by turbidity).

Component B-6 (non-inventive):

The reaction vessel is charged with 40 parts of demineralized water and 50 parts of polystyrene latex B1-5. After heating the reaction vessel to 60 °C, 0.27 parts of potassium persulfate and 0.324 parts of sodium bicarbonate, dissolved in 6.173 parts demineralized water, are added to the reaction mixture. A mixture of 44.792 parts butyl acrylate and 0.208 parts tricyclodecenylacrylate is added within a period of 210 min. In parallel to the first feed a solution of 0.282 parts of the sodium salt of a C12- to C18-paraffin sulfonic acid in 14.49 parts demineralized water is also added over a period of 190 min. Afterwards the reaction is continued for 60 min at 60 °C. Finally the polymer dispersion has a total solid content of 38.56 % and the latex particles have a particle diameter $d_w$ of 299 nm (determined by turbidity).

An amount of 156.54 parts of said obtained basic latex ($d_w$ 299 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 12 parts styrene are added at a temperature of 61 °C, followed by a post polymerization time of 30 min, where the temperature is increased from 61 to 65 °C. Then a mixture of 21.28 parts of styrene and 6.72 parts of acrylonitrile are added to the reaction over a period of 165 min. The reaction is continued at 65 °C for another 45 min. A polymer dispersion with a total solid content of 36.82 % is obtained. The latex particles have a diameter $d_w$ 340 nm (determined by turbidity).

Component B-7 (non-inventive):

The reaction vessel is charged with 40 parts of demineralized water and 50 parts of polystyrene latex B1-5. After heating the reaction vessel to 60 °C, 0.27 parts of potassium persulfate and 0.324 parts of sodium bicarbonate, dissolved in 6.173 parts demineralized water, are added to the reaction mixture. A mixture of 44.654 parts butyl acrylate and 0.282 parts tricyclodecenylacrylate is added within a period of 210 min. In parallel to the first feed a solution of 0.282 parts of the sodium salt of a C12- to C18-paraffin sulfonic acid in 14.49 parts demineralized water is also added over a period of 190 min. Afterwards the reaction is continued for 60 min at 60 °C. Finally the polymer dispersion has a total solid content of 39.11 % and the latex particles have a particle diameter $d_w$ of 302 nm (determined by turbidity).

An amount of 156.54 parts of said obtained basic latex ($d_w$ 302 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 12 parts styrene are added at a temperature of 61 °C, followed by a post polymerization time of 30 min, where the temperature is increased from 61 to 65 °C. Then a mixture of 21.28 parts of styrene and 6.72 parts of acrylonitrile are added to the reaction over a period of 165 min. The reaction is continued at 65 °C for another 45 min. A polymer dispersion with a total solid content of 37.23 % is obtained. The latex particles have a diameter $d_w$ 349 nm (determined by turbidity).

Component B-8:

The reaction vessel is charged with 40 parts of demineralized water and 50 parts of polystyrene latex B1-5. After heating the reaction vessel to 60 °C, 0.27 parts of potassium persulfate and 0.324 parts of sodium bicarbonate, dissolved in 6.173 parts demineralized water, are added to the reaction mixture. A mixture of 44.099 parts butyl acrylate and 0.901 parts tricyclodecenylacrylate is added within a period of 190 min. In parallel to the first feed a solution of 0.276 parts of the sodium salt of a C12- to C18-paraffin sulfonic acid in 14.49 parts demineralized water is also added over a period of 170 min. Afterwards the reaction is continued for 60 min at 60 °C. Finally the polymer dispersion has a total solid content of 38.27 % and the latex particles have a particle diameter $d_w$ of 296 nm (determined by turbidity).

An amount of 156.54 parts of said obtained basic latex ($d_w$ 296 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 12 parts styrene are added at a temperature of 61 °C, followed by a post polymerization time of 30 min, where the temperature is increased from 61 to 65 °C. Then a mixture of 21.28 parts of styrene and 6.72 parts of acrylonitrile are added to the reaction over a period of 165 min. The reaction is continued at 65 °C for another 45 min. A polymer dispersion with a total solid content of 36.75 % is obtained. The latex particles have a diameter $d_w$ of 331 nm (determined by turbidity).

Component B-9:

The reaction vessel is charged with 40 parts of demineralized water and 50 parts of polystyrene latex B1-5. After heating the reaction vessel to 60 °C, 0.27 parts of potassium persulfate and 0.324 parts of sodium bicarbonate, dissolved in 6.173 parts demineralized water, are added to the reaction mixture.

A mixture of 43.42 parts butyl acrylate and 1.58 parts tricyclodecenylacrylate is added within a period of 190 min. In parallel to the first feed a solution of 0.276 parts of the sodium salt of a C12- to C18- paraffin sulfonic acid in 14.49 parts demineralized water is also added over a period of 170 min. Afterwards the reaction is continued for 60 min at 60 °C. Finally the polymer dispersion has a total solid content of 37.95 % and the latex particles have a particle diameter $d_w$ of 289 nm (determined by turbidity).

An amount of 156.54 parts of said obtained basic latex ($d_w$ 289 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 12 parts styrene are added at a temperature of 61 °C, followed by a post polymerization time of 30 min, where the temperature is increased from 61 to 65 °C. Then a mixture of 21.28 parts of styrene and 6.72 parts of acrylonitrile are added to the reaction over a period of 165 min. The reaction is continued at 65 °C for another 45 min.

A polymer dispersion with a total solid content of 36.68 % is obtained. The latex particles have a diameter $d_w$ of 342 nm (determined by turbidity).

Component B-10 (non-inventive):

The reaction vessel is charged with 40 parts of demineralized water and 50 parts of polystyrene latex B1-1. After heating the reaction vessel to 60 °C, 0.27 parts of potassium persulfate and 0.324 parts of sodium bicarbonate, dissolved in 6.173 parts demineralized water, are added to the reaction mixture. A mixture of 44.307 parts butyl acrylate and 0.693 parts tricyclodecenylacrylate is added within a period of 210 min. In parallel to the first feed a solution of 0.283 parts of the sodium salt of a C12- to C18-paraffin sulfonic acid in 14.49 parts demineralized water is also added over a period of 190 min. Afterwards the reaction is continued for 180 min at 60 °C. Finally the polymer dispersion has a total solid content of 38.93 % and the latex particles have a particle diameter $d_w$ of 292 nm (determined by turbidity).

An amount of 156.54 parts of said obtained basic latex ($d_w$ 292 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 7.6 parts styrene and 2.4 parts acrylonitrile are added at a temperature of 61 °C, followed by a post polymerization time of 30 min, where the temperature is increased from 61 to 65 °C. Then a mixture of 22.8 parts of styrene and 7.2 parts of acrylonitrile are added to the reaction over a period of 180 min. The reaction is continued at 65 °C for another 90 min.

A polymer dispersion with a total solid content of 37.21 % is obtained. The latex particles have a diameter $d_w$ 342 nm (determined by turbidity).

Component B-11 (non-inventive):

The reaction vessel is charged with 40 parts of demineralized water and 50 parts of polystyrene latex B1-1. After heating the reaction vessel to 60 °C, 0.27 parts of potassium persulfate and 0.324 parts of sodium bicarbonate, dissolved in 6.173 parts demineralized water, are added to the reaction mixture. A mixture of 44.307 parts butyl acrylate and 0.693 parts tricyclodecenylacrylate is added within a period of 210 min. In parallel to the first feed a solution of 0.283 parts of the sodium salt of a C12- to C18-paraffin sulfonic acid in 14.49 parts demineralized water is also added over a period of 190 min. Afterwards the reaction is continued for 180 min at 60 °C. Finally the polymer dispersion has a total solid content of 38.97 % and the latex particles have a particle diameter $d_w$ of 309 nm (determined by turbidity).

An amount of 156.54 parts of said obtained basic latex ($d_w$ 309 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 20 parts styrene are added at a temperature of 61 °C, followed by a post polymerization time of 30 min, where the temperature is increased from 61 to 65 °C. Then a mixture of 15.2 parts of styrene and 4.8 parts of acrylonitrile are added to the reaction over a period of 180 min. The reaction is continued at 65 °C for another 90 min. A polymer dispersion with a total solid content of 36.96 % is obtained. The latex particles have a diameter $d_w$ of 358 nm (determined by turbidity).

Component B-12:

The reaction vessel is charged with 40 parts of demineralized water and 50 parts of polystyrene latex B1-1. After heating the reaction vessel to 60 °C, 0.27 parts of potassium persulfate and 0.324 parts of sodium bicarbonate, dissolved in 6.173 parts demineralized water, are added to the reaction mixture. A mixture of 44.307 parts butyl acrylate and 0.693 parts tricyclodecenylacrylate is added within a period of 210 min. In parallel to the first feed a solution of 0.283 parts of the sodium salt of a C12- to C18-paraffin sulfonic acid in 14.49 parts demineralized water is also added over a period of 190 min. Afterwards the reaction is continued for 180 min at 60 °C. Finally the polymer dispersion has a total solid content of 38.84 % and the latex particles have a particle diameter $d_w$ of 301 nm (determined by turbidity).

An amount of 156.54 parts of said obtained basic latex ($d_w$ 301 nm) is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 12 parts styrene are added at a temperature of 61 °C, followed by a post polymerization time of 30 min, where the temperature is increased from 61 to 65 °C. Then a mixture of 21.28 parts of styrene and 6.72 parts of acrylonitrile are added to the reaction over a period of 180 min. The reaction is continued at 65 °C for another 90 min. A polymer dispersion with a total solid content of 37.23 % is obtained. The latex particles have a diameter $d_w$ of 351 nm (determined by turbidity).

Component B-13:

The reaction vessel is charged with 40 parts of demineralized water and 50 parts of polystyrene latex B1-5. After heating the reaction vessel to 60 °C, 0.27 parts of potassium persulfate and 0.324 parts of sodium bicarbonate, dissolved in 6.173 parts demineralized water, are added to the reaction mixture. A mixture of 44.099 parts butyl acrylate and 0.901 parts tricyclodecenylacrylate is added within a period of 190 min. In parallel to the first feed a solution of 0.276 parts of the sodium salt of a C12- to C18-paraffin sulfonic acid in 14.49 parts demineralized water is also added over a period of 170 min. Afterwards the reaction is continued for 60 min at 60 °C. Finally the polymer dispersion has a total solid content of 38.02 % and the latex particles have a particle diameter $d_w$ of 284 nm (determined by turbidity).

An amount of 156.54 parts of the above described basic latex is added to the reaction vessel together with 70 parts of demineralized water, 0.06 parts of the sodium salt of a C12- to C18- paraffin sulfonic acid and 0.16 parts of potassium persulfate, dissolved in 5.61 parts of demineralized water. The reaction mixture is heated to 61 °C. Within a period of 60 min 12 parts styrene are added at a temperature of 61 °C, followed by a post polymerization time of 30 min, where the temperature is increased from 61 to 65 °C. Then a mixture of 19.60 parts of styrene and 8.40 parts of acrylonitrile are added to the reaction over a period of 165 min. The reaction is continued at 65 °C for another 45 min. A polymer dispersion with a total solid content of 36.61 % is obtained. The latex particles have a diameter $d_w$ of 331 nm (determined by turbidity).

Precipitation/Drying

875 g of a MgSO4 solution (19.9 wt.-%) is mixed with 21214 g demineralized water. 4418 g of this solution is used as pre-charge and heated to 88 °C. 9000 g of the polymer latex and 17671 g of the remaining diluted MgSO4 solution are added separately within 10 min, while the temperature is kept at 88 °C.

Then the resulting mixture is heated to 99 °C for 5 min. The resulting slurry is filtered off, washed two times with 20000 g of demineralized water and dried in a lab oven at 70 °C for 2 days.

Component B-14 (non-inventive):

The reaction vessel was charged with 70.66 parts of demineralized water, 0.3 parts of the graft base S-B1 (obtained as described above having a particle diameter of 75 nm) and 0.23 parts of sodium bicarbonate. After heating the reaction vessel to 60 °C, 0.16 parts of sodium persulfate, dissolved in 5 parts demineralized water, were added to the reaction mixture. A mixture of 59.51 parts butyl acrylate and 1.21 parts tricyclodecenylacrylate was added within a period of 210 min. In parallel to the first feed a solution of 0.36 parts of the sodium salt of a C12-C18 paraffin sulfonic acid in 16.6 parts demineralized water was also added over a period of 210 min. After 200 min, from starting the feed, the temperature was ramped to 65 °C. Afterwards the reaction was continued for 60 min at 65 °C. Finally the polymer dispersion (graft base B1-6) had a total solid content of 39.4 % and the latex particles had a particle diameter Dw of 440 nm (determined by turbidity).

An amount of 154 parts of the graft base B1-6 as described above was added to the reaction vessel together with 88.29 parts of demineralized water, 0.11 parts of the sodium salt of a C12-C18 paraffin sulfonic acid and 0.14 parts of sodium persulfate, dissolved in 5.61 parts of demineralized water. The reaction mixture was heated to 61°C. Within a period of 60 min 13.16 parts were added at a temperature of 61°C, followed by a post polymerization time of 90 min, where the temperature was increased from 61°C to 65°C. Then a mixture of 20.5 parts of styrene and 6.83 parts of acrylonitrile were added to the reaction over a period of 150 min. The reaction was continued at 65 °C for another 60 min. A polymer dispersion with a total solid content of 35.2 % was obtained. The latex particles had a particle diameter $d_w$ of 500 nm (determined by turbidity). Precipitation and drying was as described hereinbefore.

Compounding/Testing

Component A-1:

Poly-(styrene-co-acrylonitrile) having an acrylonitrile (AN) content of 33 wt.-% and a viscosity number of 80 ml/g.

Component D-1: Polyethylene Wax, Paracerin® H100 from Sasol Wax GmbH

Component D-2: Plasticizer DPHP, Palatinol® 10-P from OQEMA AG, Germany

Component D-3: Tinuvin® 770 from BASF SE, Germany

Component D-4: Tinuvin® P from BASF SE, Germany

Component D-5: Masterbatch: 60 wt.-% KRONOS® 2222, 40 wt.-% SAN-copolymer (24 wt.-% ACN, viscosity no. 64 ml/g)

Component D-6: KRONOS® 2222 from Kronos International Inc.

Component D-7: Ultramarine Violet 11D from Venator Pigments France SAS

Component D-8: Ultramarine Blue 61 T1 from Venator Pigments France SAS.

Examples 2, 3 and 5 were prepared by compounding components A and B using a twin screw extruder (Process 11, Thermo Fisher, 11 mm screws, 40 UD, screw speed 220 rpm) at a temperature gradient of 220 to 250 °C according to the specific ratios given in Table 1 and Table 2. Prior to compounding the raw materials have been dried at 80 °C under vacuum for 8 h. Specimens for impact testing have been prepared via injection molding (IM) (Engel E-Max, dye temp. 270°C). Impact strength (ak) was tested acc. to ISO 179/1eA (2010); Circular Saw Mutronic Diadisc 6200 for V notch, Impact pendulum Zwick/Roell RKP 5113 (50 J hammer), 10 samples per material tested.
For compounding of Comparative Examples 1 to 10 and Examples 1, 4, 6 and 7 a Co-perion ZSK 25 extruder was used (220 to 250 mass temperature) and for injection molding (IM) an Arburg machine was used under standard conditions (250 °C to 270 °C melt temperature, 70 °C tool temperature). Charpy notched impact strength (ak) was measured according to DIN 53 453 (ISO 179 1eA (2010)).

CIELab color measurement:

Colorability of a resin composition is mainly determined by its opacity. In order to evaluate the opacity the color (CIELab) of a material is measured against a white and a black background. Test specimens for color measurements have a thickness of 2 mm and were prepared via injection molding using 240 °C dye temperature.
For testing a Datacolor 110 was used (acc. to EN ISO 11664-4:2011). Each sample was measured against a white background (e.g. tile) and a black background e.g. tile).
The resulting L, a and b values for the single color axes are used to calculate the color difference dE between both measurements according to the following formula:

$$dE - \sqrt{\left(L(white) - L(black)\right)^2 + \left(a(white) - a(black)\right)^2 + \left(b(white) - b(black)\right)^2}$$

The higher the resulting dE value is the more translucent (less opaque) is the material.

Table 1 below shows the results of the CIELab color measurements:

|  | white-tile | | | black-tile | | |  |
| --- | --- | --- | --- | --- | --- | --- | --- |
|  | L | a | b | L | A | b | dE |
| Comp. Ex. 7 | 87.63 | 2.8 | 15.84 | 84.73 | -1.48 | 10.82 | 7.2 |
| Ex. 1 | 87.29 | 3.16 | 15.14 | 84.5 | -1.22 | 10.43 | 7.0 |
| Ex. 4 | 87.68 | 2.9 | 14.79 | 84.5 | -1.9 | 9.68 | 7.7 |
| Comp. Ex. 8 | 88.18 | 2.7 | 13.81 | 85.27 | -1.8 | 9.18 | 7.1 |
| Comp. Ex. 4 | 89.76 | 1.76 | 13.04 | 87.67 | -1.58 | 9.55 | 5.3 |
| Comp. Ex. 2 | 89.07 | 1.5 | 17.95 | 84.12 | -4.06 | 9.83 | 11.0 |
| Comp. Ex. 1 | 92.32 | 0.79 | 12.99 | 91.13 | -0.94 | 11.05 | 2.9 |
| Ex. 2 | 90.54 | 0.63 | 14.18 | 85.43 | -4.27 | 6 | 10.8 |
| Ex. 5 | 89.97 | 0.84 | 14.99 | 85.34 | -3.98 | 7.18 | 10.3 |
| Ex. 3 | 89.9 | 0.35 | 15.47 | 83.86 | -4.77 | 6.11 | 12.3 |
| Comp. Ex. 5 | 90.21 | 2.02 | 14.51 | 87.82 | -1.75 | 10.45 | 6.0 |

(continued)

| | white-tile | | | black-tile | | | |
|---|---|---|---|---|---|---|---|
| | L | a | b | L | A | b | dE |
| Comp. Ex. 6 | 89.58 | 2.34 | 15.2 | 87.15 | -1.66 | 11.13 | 6.2 |

From Table 1 it can be seen that the molding compositions according to the invention have a low opacity (dE= ≥ 7) and thus a good colorability.

Table 2 shows the influence of the polystyrene (PS) core (B1) weight fraction of graft copolymers B (dw 350 nm, graft shell: 4 wt.-% B3, 36 wt.-% B4 (24 wt.-% ACN)) on the impact strength and opacity of the molding compositions.

Table 2: Influence of PS core (B1) weight fraction

| | Comp. Ex. 1 | Ex. 1 | Comp. Ex. 2 |
|---|---|---|---|
| Component A-1 | 60 | 60 | 60 |
| Component B-1 | 40 | | |
| Component B-2 | | 40 | |
| Component B-3 | | | 40 |
| PS core weight fraction wt.-% (B1) | 0 | 15 | 20 |
| DCPA content in B1 wt.-% | N/A | 2.01 | 2.01 |
| DCPA content in B2 wt.-% | 1.99 | 1.54 | 1.54 |
| Swelling index basic rubber (B1+ B2) (Toluene) | 12 | 11 | 12 |
| ak [kJ/m$^2$] IM 270 °C | 28 | 14 | 12 |
| dE | 2.9 | 7.0 | 11.0 |

From Table 2 it can be seen that only core/shell graft copolymers having a core (B1) weight fraction according to the invention (cp. Example 1) lead to resin compositions with good impact strength (ak>13 kJ/m$^2$) as well as a low opacity (dE= ≥ 7, good colorability, dE).

Table 3 shows the influence of the weight average particle diameter dw of graft copolymers B (PS core (B1):15 wt.-%, graft shell: 4 wt.-% B3, 36 wt.-% B4 (24 wt.-% ACN), DCPA in B1 2.01 wt.-%, DCPA in B2 1.54 wt.-%) on the impact strength and opacity of the molding compositions.

Table 3: Influence of the weight average particle diameter dw

| | Comp. Ex. 3 | Ex. 1 | Comp. Ex. 4 |
|---|---|---|---|
| Component A-1 | 60 | 60 | 60 |
| Component B-4 | 40 | | |
| Component B-2 | | 40 | |
| Component B-5 | | | 40 |
| $d_w$ [nm] | 220 | 351 | 540 |
| Swelling index basic rubber (B1+ B2) (Toluene) | 14 | 11 | 12 |
| ak [kJ/m$^2$] IM 270 °C | 8 | 14 | 13 |
| dE | x | 7.0 | 5.3 |

It can be shown that molding compositions comprising graft copolymers having a weight average particle diameter $d_w$ according to the invention (cp. Example 1) exhibit a good impact resistance as well as a low opacity.

Table 4 shows the influence of cross-linking of the rubber layer (B2) of graft copolymers B (DCPA content of B1 3.0 wt.-%, PS core (B1) 15 wt.-%, graft shell: 12 wt.-% B3, 28 wt.-% B4 (24 wt.-% ACN), $d_w$ ~330 to 340 nm) on the impact strength and opacity of the molding compositions.

Table 4: Influence of cross-linking of rubber layer (B2)

| | Comp. Ex. 5 | Comp. Ex. 6 | Ex. 2 | Ex. 3 |
|---|---|---|---|---|
| Component A-1 | 60 | 60 | 60 | |
| Component B-6 | 40 | | | |
| Component B-7 | | 40 | | |
| Component B-8 | | | 40 | |
| Component B-9 | | | | 40 |
| wt.-% DCPA in B2 | 0.46 | 0.77 | 2.0 | 3.5 |
| Swelling index (Toluene) basic rubber (B1 + B2) | 21 | 20 | 11 | 9 |
| ak [kJ/m$^2$] IM 270 °C | 13 | 14 | 21 | 20 |
| dE | 6.0 | 6.2 | 10.8 | 12.3 |

Table 4 shows that only molding compositions comprising graft copolymers B with cross-liking monomer amounts of layer B2 according to the invention (cp. examples 2 and 3) show a high impact strength as well as a low opacity which further have a swelling index of clearly below 20 (determined in Toluene).

Table 5 shows the influence of the proportion of the graft shell layers B3 (PS) and B4 (SAN) of graft copolymers B (PS core (B1) = 15 wt.-%, particle diameter $d_w$ ~350 nm) on the impact strength and opacity of the molding compositions.

Table 5: Influence of the proportions of graft shell layers B3 and B4

| Content in wt.-% | Comp. Ex. 7 | Comp. Ex. 8 | Ex. 1 | Ex. 4 | Ex. 2 | Ex. 5 |
|---|---|---|---|---|---|---|
| Component A-1 | 60 | 60 | 60 | 60 | | |
| Component B-2 | | | | 40 | | |
| Component B-10 | 40 | | | | | |
| Component B-11 | | 40 | | | | |
| Component B-12 | | | | 40 | | |
| Component B-8 | | | | | 40 | |
| Component B-13 | | | | | | 40 |
| wt.-% DCPA in B1 | 2.01 | 2.01 | 2.01 | 2.01 | 3.0 | 3.0 |
| wt.-% DCPA in B2 | 1.54 | 1.54 | 1.54 | 1.54 | 2.0 | 2.0 |
| Swelling index basic rubber (Toluene) | 14 | 11 | 11 | 11 | 11 | 11 |
| B3 (wt.-%) : B4 (wt.-%), based on total B | 0:40 | 20:20 | 4:36 | 12:28 | 12:28 | 12:28 |
| AN content (wt.-%), based on total | 24 | 24 | 24 | 24 | 24 | 30 |
| B4 | | | | | | |
| ak [kJ/m$^2$] IM 270 °C | 4 | 12 | 14 | 20 | 21 | 24 |
| dE | 7.2 | 7.1 | 7.0 | 7.7 | 10.8 | 10.3 |

Table 5 shows that also the ratio of the two graft layers B3 (PS) and B4 (SAN) has a clear influence on the mechanical properties. Only the Examples 1, 2, 4, 5 according to the invention, show high impact strength. In case of no first layer B3 of the graft copolymer (Comp. Ex. 7) or insufficient amount of B4, impact strength is significantly reduced.

In Table 6 the properties of molding compositions comprising different graft copolymers B and several additives D have been tested.

Table 6: Comparison of molding compositions comprising graft copolymers B and additives D

| Content of component in wt.-% | Comp. Ex. 9 | Comp. Ex. 10 | Ex. 6 | Ex. 7 |
|---|---|---|---|---|
| Component A-1 | 53 | 53 | 53 | 53 |
| Component 14 | 47 | 47 | | |
| Component B-12 | | | 47 | 47 |
| Component D-1 | 1 | 1 | 1 | 1 |
| Component D-2 | 1.5 | 1.5 | 1.5 | 1.5 |
| Component D-3 | | 0.5 | | 0.5 |
| Component D-4 | | 0.5 | | 0.5 |
| Component D-5 | | 16.7 | | 8 |
| Component D-6 | | 5 | | 2.5 |
| Component D-7 | | 0.04 | | 0.02 |
| Component D-8 | | 0.015 | | 0.0075 |
| CIELab L* value | 89.4 | 96.2 | 91.2 | 95.7 |
| ak [kJ/m$^2$] IM 270 °C | 31 | 10 | 47 | 12 |

Molding compositions according to the invention (cp. Examples 6 and 7 with graft copolymer B-12 according to the invention) show a higher impact strength compared to molding compositions comprising a non-inventive graft copolymer B-14 (see Comp. Ex. 9 and 10). It can be further shown that by use of the inventive molding composition only 50 % of the pigment amount is necessary to achieve the same CIELab L value (measure for white color), compared to a molding composition comprising a non-inventive graft copolymer.

**Claims**

1.  Graft copolymer B produced from emulsion polymerization with a core-shell structure comprising a core B1 and three layers B2 to B4, in the sequence B1 to B4 from inside to outwards, and in each case based on the sum of B1 to B4:
    B1: 6 to 19 wt.-% of a core (= graft base) B1 comprising at least one copolymer consisting of monomers B11 and B12:

    B11: 95.0 to 99.9 wt.-%, preferably 96.0 to 98.0 wt.-%, of at least one vinylaromatic monomer, and
    B12: from 0.1 to 5.0 wt.-%, preferably 2.0 to 4.0 of at least one bi- or polyfunctional, crosslinking monomer;

    where the sum of B11 and B12 adds up to 100 wt.-%;
    B2: 41 to 54 wt.-%, preferably 42 to 50 wt.-%, more preferably 43 to 45 wt.-%, of a first layer B2 consisting of at least one copolymer comprising monomers B21 and B22:

    B21: up to 99.0 wt.-%, preferably up to 98.5 wt.-%, of at least one C2-C8-alkyl acrylate;
    B22: 1.0 to 5.0 wt.-%, preferably 1.5 to 3.5 wt.-%, of one or more bi- or polyfunctional, crosslinking monomers;
    where - based on B2 - the sum of the total monomers adds up to 100 wt.-%;

    B3: 1 to 19 wt.-% of a second layer B3 consisting of at least one vinylaromatic polymer; and
    B4: 21 to 39 wt.-% of a third layer B4 consisting of at least one copolymer comprising at least one vinylaromatic monomer B41 and at least one nitrile monomer B42, wherein

    the amount of B42, based on B4, is 20 to 33 wt.-%, preferably 22 to 28 wt.-%, and where the sum of the total monomers (in particular B41 and B42) adds up to 100 wt.-%;
    where the sum of B1, B2, B3 and B4 adds up to 100 wt.-%; and wherein
    the weight average particle diameter $d_w$ - determined by turbidity measurement - of the graft copolymer B is in the range of from 280 to 450 nm.

2. Graft copolymer B according to claim 1 wherein the weight average particle diameter $d_w$ of the graft base B1 is in the range of from 310 to 370 nm nm, preferably 320 to 360 nm.

3. Graft copolymer B according to claim 1 or 2 wherein the amount of core B1 is 10 to 18 wt.-%, preferably 15 to 17 wt.-%.

4. Graft copolymer B according to any of claims 1 to 3 wherein the amount of layer B3 is 3 to 15 wt.-%, preferably 4 to 12 wt.-% and the amount of layer B4 is 27 to 35 wt.-%, preferably 28 to 36 wt.-%, of a third layer (second graft shell layer) B4.

5. Graft copolymer B according to any of claims 1 to 4 wherein layer B2 consists of one copolymer consisting of monomers B21 and B22, wherein the amount of B22 is 1.5 to 3.5 wt.-%.

6. Graft copolymer B according to any of claims 1 to 5 wherein layer B4 consists of at least one copolymer consisting of one vinylaromatic monomer B41 and one nitrile monomer B42, wherein the amount of B42, based on B4, is 22 to 28 wt.-%.

7. Graft copolymer B according to any of claims 1 to 6 wherein

   the crosslinking monomer B12 and/or B22 is dihydrodicyclopentadienyl acrylate;
   the vinylaromatic monomer B11 and/or B41 is styrene;
   the nitrile monomer B42 is acrylonitrile; and
   the C2-C8-alkyl acrylate B21 is n-butyl acrylate.

8. Process for the preparation of graft copolymer B according to any of claims 1 to 7 comprising the following steps:

   (i) first production of a core (= graft base) B1 in presence of a seed polymer latex (S-B1) - having a weight average particle diameter $d_w$ of below that of the particles of the final graft base B1 - by emulsion polymerization, by polymerizing monomer B11 and crosslinking monomer B12;
   (ii) then, on this resultant latex of core B1, in a first graft reaction a first layer B2 is prepared by addition and polymerization of at least one C2-C8-alkyl acrylate B21, optionally further comonomers, and crosslinking monomers B22;
   (iii) then, on this resultant rubber latex, in a second graft reaction a second layer B3 is prepared by addition and polymerization of at least one vinylaromatic monomer; and
   (iv) at last, on this resultant graft copolymer latex, in a third graft reaction a third layer B4 is prepared by addition and polymerization of at least one vinylaromatic monomer B41 and at least one nitrile monomer B42, and optionally further comonomers;

   wherein steps (i) to (iv) are carried out in aqueous emulsion with a free-radical initiator at temperatures of from 30° to 120°C.

9. Process for the preparation of graft copolymer B according to claim 8, wherein the seed polymer latex (S-B1), preferably a crosslinked acrylate rubber latex, is used in amounts of from 0.01 to 3 wt.-%, based on the total amount of monomer used for the preparation of graft copolymer B, and wherein the weight average particle diameter $d_w$ of S-B1 is less than 120 nm.

10. Thermoplastic molding composition comprising a polymer mixture PM consisting of components A and B:

    (A) 30 to 85 wt.-%, preferably 40 to 70 wt.-%, more preferably 55 to 65 wt.-%, of at least one thermoplastic copolymer A comprising at least one vinylaromatic monomer, preferably styrene, A1, and at least one nitrile monomer, preferably acrylonitrile, A2;
    (B) 15 to 70 wt.-%, preferably 30 to 60 wt.-%, more preferably 35 to 45 wt.-%, of at least one graft copolymer B according to any of claims 1 to 7;

    where the sum of A and B adds up to 100 wt.-%.

11. Thermoplastic molding composition according to claim 10 comprising further components C, D and/or E:

    40 to 100 wt.-% of a polymer mixture PM composed of components A and B as defined above;

0 to 30 wt.-% of at least one further graft copolymer C - different from graft copolymer B - composed of an elastomeric, crosslinked acrylate polymer C1 (= graft base C1) and at least one graft shell C2, which is obtained via emulsion polymerization in the presence of at least one graft base C1, which graft shell C2 is made of a mixture comprising at least one vinylaromatic monomer C2-1 and at least one nitrile monomer C2-2;
0 to 20 wt.-% of additives and/or auxiliaries D; and
0 to 50 wt.-% of at least one further thermoplastic polymer E selected from aromatic polycarbonates and polyamides;

based in each case on the overall molding composition, and where the sum of PM, and components C, D and/or E adds up to 100 wt.-%.

12. Thermoplastic molding composition according to claim 10 or 11, wherein the proportion of the nitrile monomer A2, based on A, of thermoplastic copolymer A is from 20 to 35% by weight.

13. Thermoplastic molding composition according to any of claims 10 to 12, wherein graft copolymer C has one graft shell C2 consisting of only one layer (= single layer) made of a mixture comprising at least one vinylaromatic monomer, in particular styrene, C2-1 and at least one nitrile monomer, in particular acrylonitrile, C2-2, where the amount of C2-2, based on the total amount of C2, is 20 to 35 wt.-%, preferably 22 to 30 wt.-%.

14. Thermoplastic molding composition according to any of claims 10 to 12, wherein the graft shell C2 of graft copolymer C consists of a first layer C21 made from at least one vinylaromatic monomer, and a second layer C22 made of a mixture comprising at least one vinylaromatic monomer C22-1 and at least one nitrile monomer C22-2; where the amount of C22-2, based on the total amount of C22, is 20 to 35 wt.-%, and wherein the weight average particle diameter $d_w$ of the graft base C1 of graft copolymer C is in the range of from 300 to 700 nm, preferably 350 to 650 nm, more preferably 400 to 600 nm.

15. Process for the preparation of thermoplastic molding compositions according to any of claims 10 to 14 by melt-mixing graft copolymer B with copolymer A and, where present, with the further components C, D and/or E in a mixing apparatus.

16. Shaped articles produced from the molding compositions according to any of claims 10 to 14.

17. Use of graft copolymers according to any of claims 1 to 7 or of molding compositions according to any of claims 10 to 14 in the automotive industry, for building and construction, toys and/or leisure.


**Patentansprüche**

1. Pfropfcopolymer B, das hergestellt ist durch Emulsionspolymerisation mit einer Kern-Schale-Struktur, umfassend einen Kern B1 und drei Schichten B2 bis B4 in der Sequenz B1 bis B4 von innen nach außen, und in jedem Fall bezogen auf die Summe von B1 bis B4:
B1: 6 bis 19 Gew.% von einem Kern (= Pfropfbasis) B1, umfassend mindestens ein Copolymer bestehend aus Monomeren B11 und B12:

B11: 95,0 bis 99,9 Gew.%, vorzugsweise 96,0 bis 98,0 Gew.% von mindestens einem vinylaromatischen Monomer, und
B12: 0,1 bis 5,0 Gew.%, vorzugsweise 2,0 bis 4,0 von mindestens einem bi- oder polyfunktionellen Vernetzungsmonomer;
wobei die Summe aus B11 und B12 100 Gew.% ergibt;
B2: 41 bis 54 Gew.%, vorzugsweise 42 bis 50 Gew.%, bevorzugter 43 bis 45 Gew.% einer ersten Schicht B2, bestehend aus mindestens einem Copolymer, umfassend Monomere B21 und B22:

B21: bis zu 99,0 Gew.%, vorzugsweise bis zu 98,5 Gew.% von mindestens einem $C_2$- bis $C_8$-Alkylacrylat;
B22: 1,0 bis 5,0 Gew.%, vorzugsweise 1,5 bis 3,5 Gew.% von einem oder mehreren bi- oder polyfunktionellen Vernetzungsmonomeren;
wobei die Summe der gesamten Monomere - bezogen auf B2 - 100 Gew.% ergibt;
B3: 1 bis 19 Gew.% einer zweiten Schicht B3, bestehend aus mindestens einem vinylaromatischen Polymer; und

B4: 21 bis 39 Gew.% einer dritten Schicht B4, bestehend aus mindestens einem Copolymer, umfassend mindestens ein vinylaromatisches Monomer B41 und mindestens ein Nitrilmonomer B42, wobei die Menge an B42, bezogen auf B4, 20 bis 33 Gew.%, vorzugsweise 22 bis 28 Gew.% beträgt, und wobei die Summe der gesamten Monomere (insbesondere B41 und B42) 100 Gew.% ergibt; wobei die Summe aus B1, B2, B3 und B4 100 Gew.% ergibt; und wobei der durchschnittliche Partikeldurchmesser (Gewichtsmittel) $d_w$ des Pfropfcopolymers B - bestimmt mittels Trübungsmessung - im Bereich von 280 bis 450 nm liegt.

2. Pfropfcopolymer B nach Anspruch 1, wobei der durchschnittliche Partikeldurchmesser (Gewichtsmittel) $d_w$ der Pfropfbasis B1 im Bereich von 310 bis 370 nm, vorzugsweise 320 bis 360 nm liegt.

3. Pfropfcopolymer B nach Anspruch 1 oder 2, wobei die Menge des Kerns B1 10 bis 18 Gew.%, vorzugsweise 15 bis 17 Gew.% beträgt.

4. Pfropfcopolymer B nach einem der Ansprüche 1 bis 3, wobei die Menge der Schicht B3 3 bis 15 Gew.%, vorzugsweise 4 bis 12 Gew.% beträgt, und die Menge der Schicht B4 27 bis 35 Gew.%, vorzugsweise 28 bis 36 Gew.% einer dritten Schicht (zweite Pfropfschalenschicht) B4 beträgt.

5. Pfropfcopolymer B nach einem der Ansprüche 1 bis 4, wobei Schicht B2 aus einem Copolymer besteht, das aus den Monomeren B21 und B22 besteht, wobei die Menge an B22 1,5 bis 3,5 Gew.% beträgt.

6. Pfropfcopolymer B nach einem der Ansprüche 1 bis 5, wobei Schicht B4 aus mindestens einem Copolymer besteht, das aus einem vinylaromatischen Monomer B41 und einem Nitrilmonomer B42 besteht, wobei die Menge an B42, bezogen auf B4, 22 bis 28 Gew.% beträgt.

7. Pfropfcopolymer B nach einem der Ansprüche 1 bis 6, wobei:

das Vernetzungsmonomer B12 und/oder B22 Dihydrodicyclopentadienylacrylat ist;
das vinylaromatische Monomer B11 und/oder B41 Styrol ist;
das Nitrilmonomer B42 Acrylnitril ist; und
das $C_2$- bis $C_8$-Alkylacrylat B21 n-Butylacrylat ist.

8. Verfahren zur Herstellung von Pfropfcopolymer B nach einem der Ansprüche 1 bis 7, umfassend die folgenden Schritte:

(i) zuerst Produktion eines Kerns (= Pfropfbasis) B1 in Gegenwart eines Impfpolymerlatex (S-B1) - mit einem durchschnittlichen Partikeldurchmesser (Gewichtsmittel) $d_w$ unter demjenigen der Partikel der endgültigen Pfropfbasis B1 - durch Emulsionspolymerisation, indem Monomer B11 und Vernetzungsmonomer B12 polymerisiert werden;
(ii) dann wird an diesem resultierenden Latex des Kerns B1 in einer ersten Pfropfreaktion eine erste Schicht B2 durch Zugabe und Polymerisation von mindestens einem $C_2$-bis $C_a$-Alkylacrylat B21, gegebenenfalls weiteren Comonomeren und Vernetzungsmonomeren B22 hergestellt;
(iii) dann wird an diesem resultierenden Kautschuklatex in einer zweiten Pfropfreaktion eine zweite Schicht B3 durch Zugabe und Polymerisation von mindestens einem vinylaromatischen Monomer hergestellt; und
(iv) schließlich wird an diesem resultierenden Pfropfcopolymerlatex in einer dritten Pfropfreaktion eine dritte Schicht B4 durch Zugabe und Polymerisation von mindestens einem vinylaromatischen Monomer B41 und mindestens einem Nitrilmonomer B42 und gegebenenfalls weiteren Monomeren hergestellt;

wobei die Schritte (i) bis (iv) in wässriger Emulsion mit einem freiradikalischen Initiator bei Temperaturen von 30 ° bis 120 °C durchgeführt werden.

9. Verfahren zur Herstellung von Pfropfcopolymer B nach Anspruch 8, wobei der Impfpolymerlatex (S-B1), vorzugsweise ein vernetzter Acrylatkautschuklatex, in Mengen von 0,01 bis 3 Gew.% verwendet wird, bezogen auf die Gesamtmenge an Monomer, die zur Herstellung von Pfropfcopolymer B verwendet wird, und wobei der durchschnittliche Partikeldurchmesser (Gewichtsmittel) $d_w$ von S-B1 kleiner als 120 nm ist.

10. Thermoplastische Formzusammensetzung, umfassend eine Polymermischung PM, die aus Komponenten A und B besteht:

(A) 30 bis 85 Gew.%, vorzugsweise 40 bis 70 Gew.%, bevorzugter 55 bis 65 Gew.% von mindestens einem thermoplastischen Copolymer A, umfassend mindestens ein vinylaromatisches Monomer, vorzugsweise Styrol, A1, und mindestens ein Nitrilmonomer, vorzugsweise Acrylnitril, A2;

(B) 15 bis 70 Gew.%, vorzugsweise 30 bis 60 Gew.%, bevorzugter 35 bis 45 Gew.% von mindestens einem Pfropfcopolymer B gemäß einem der Ansprüche 1 bis 7; wobei die Summe aus A und B 100 Gew.% ergibt.

11. Thermoplastische Formzusammensetzung nach Anspruch 10, umfassend weitere Komponenten C, D und/oder E:

40 bis 100 Gew.% einer Polymermischung PM, die aus Komponenten A und B wie oben definiert zusammengesetzt ist;

0 bis 30 Gew.% von mindestens einem weiteren Pfropfcopolymer C - das von Pfropfcopolymer B verschieden ist

- und zusammengesetzt ist aus einem elastomeren vernetzten Acrylatpolymer C1 (= Pfropfbasis C1) und mindestens einer Pfropfschale C2, die mittels Emulsionspolymerisation in Gegenwart von mindestens einer Pfropfbasis C1 erhalten wird, wobei die Pfropfschale C2 aus einer Mischung gefertigt ist, die mindestens ein vinylaromatisches Monomer C2-1 und mindestens ein Nitrilmonomer C2-2 umfasst;

0 bis 20 Gew.% Additive und/oder Hilfsstoffe D; und

0 bis 50 Gew.% von mindestens einem weiteren thermoplastischen Polymer E ausgewählt aus aromatischen Polycarbonaten und Polyamiden;

in jedem Fall bezogen auf die gesamte Formzusammensetzung, und wobei die Summe aus PM und Komponenten C, D und/oder E 100 Gew.% ergibt.

12. Thermoplastische Formzusammensetzung nach Anspruch 10 oder 11, wobei der Anteil des Nitrilmonomers A2, bezogen auf A, des thermoplastischen Copolymers A 20 bis 35 Gew.% beträgt.

13. Thermoplastische Formzusammensetzung nach einem der Ansprüche 10 bis 12, wobei Pfropfcopolymer C eine Pfropfschale C2 aufweist, die aus nur einer Schicht (= Einzelschicht) besteht, die aus einer Mischung gefertigt ist, die mindestens ein vinylaromatisches Monomer, insbesondere Styrol, C2-1, und mindestens ein Nitrilmonomer, insbesondere Acrylnitril, C2-2, umfasst, wobei die Menge an C2-2, bezogen auf die Gesamtmenge an C2, 20 bis 35 Gew.%, vorzugsweise 22 bis 30 Gew.% beträgt.

14. Thermoplastische Formzusammensetzung nach einem der Ansprüche 10 bis 12, wobei die Pfropfschale C2 des Pfropfcopolymers C aus einer ersten Schicht C21, die aus mindestens einem vinylaromatischen Monomer gefertigt ist, und einer zweiten Schicht C22 besteht, die aus einer Mischung gefertigt ist, die mindestens ein vinylaromatisches Monomer C22-1 und mindestens ein Nitrilmonomer C22-2 umfasst; wobei die Menge an C22-2, bezogen auf die Gesamtmenge an C22, 20 bis 35 Gew.% beträgt, und wobei der durchschnittliche Partikeldurchmesser (Gewichtsmittel) $d_w$ der Pfropfbasis C1 des Pfropfcopolymers C im Bereich von 300 bis 700 nm, vorzugsweise 350 bis 650 nm, bevorzugter 400 bis 600 nm liegt.

15. Verfahren zur Herstellung von thermoplastischen Formzusammensetzungen nach einem der Ansprüche 10 bis 14 durch Schmelzmischen von Pfropfcopolymer B mit Copolymer A und, sofern vorhanden, mit den weiteren Komponenten C, D und/oder E in einem Mischapparat.

16. Geformte Artikel, die aus den Formzusammensetzungen nach einem der Ansprüche 10 bis 14 produziert worden sind.

17. Verwendung von Pfropfcopolymeren nach einem der Ansprüche 1 bis 7 oder von Formzusammensetzungen nach einem der Ansprüche 10 bis 14 in der Automobilindustrie, für Bau und Konstruktion, Spielsachen und/oder im Freizeitbereich.

**Revendications**

1. Copolymère greffé B produit à partir d'une polymérisation en émulsion comportant une structure noyau-enveloppe comprenant un noyau B1 et trois couches B2 à B4, dans la séquence B1 à B4 depuis l'intérieur vers l'extérieur, et en chaque cas sur la base de la somme de B1 à B4 :

B1 : 6 à 19 % en poids d'un noyau (= base de greffage) B1 comprenant au moins un copolymère constitué de monomères B11 et B12 :

B11 : 95,0 à 99,9 % en poids, préférablement 96,0 à 98,0 % en poids d'au moins un monomère vinylaromatique, et
B12 : de 0,1 à 5,0 % en poids, préférablement 2,0 à 4,0 d'au moins un monomère réticulant, bifonctionnel ou polyfonctionnel ;
où la somme de B11 et B12 totalise 100 % en poids ;
B2 : 41 à 54 % en poids, préférablement 42 à 50 % en poids, plus préférablement 43 à 45 % en poids, d'une première couche B2 constituée d'au moins un copolymère comprenant des monomères B21 et B22 :

B21 : jusqu'à 99,0 % en poids, préférablement jusqu'à 98,5 % en poids, d'au moins un acrylate d'alkyle en C2-C8 ;
B22 : 1,0 à 5,0 % en poids, préférablement 1,5 à 3,5 % en poids, d'un ou plusieurs monomères réticulants, bifonctionnels ou polyfonctionnels ;
où - sur la base de B2 - la somme des monomères totaux totalise 100 % en poids ;
B3 : 1 à 19 % en poids d'une deuxième couche B3 constituée d'au moins un polymère vinylaromatique ; et
B4 : 21 à 39 % en poids d'une troisième couche B4 constituée d'au moins un copolymère comprenant au moins un monomère vinylaromatique B41 et au moins un monomère de nitrile B42,
la quantité de B42, sur la base de B4, étant de 20 à 33 % en poids, préférablement de 22 à 28 % en poids,
et où la somme des monomères totaux (en particulier B41 et B42) totalise 100 % en poids ;
où la somme de B1, B2, B3 et B4 totalise 100 % en poids ; et
le diamètre moyen de particule en poids $d_w$ - déterminé par une mesure de turbidité - du copolymère greffé B étant dans la plage allant de 280 à 450 nm.

2. Copolymère greffé B selon la revendication 1, le diamètre moyen de particule en poids $d_w$ de la base de greffage B1 étant dans la plage allant de 310 à 370 nm, préférablement de 320 à 360 nm.

3. Copolymère greffé B selon la revendication 1 ou 2, la quantité de noyau B1 étant de 10 à 18 % en poids, préférablement de 15 à 17 % en poids.

4. Copolymère greffé B selon l'une quelconque des revendications 1 à 3, la quantité de couche B3 étant de 3 à 15 % en poids, préférablement de 4 à 12 % en poids et la quantité de couche B4 étant de 27 à 35 % en poids, préférablement de 28 à 36 % en poids, d'une troisième couche (deuxième couche d'enveloppe de greffage) B4.

5. Copolymère greffé B selon l'une quelconque des revendications 1 à 4, la couche B2 étant constituée d'un copolymère constitué de monomères B21 et B22, la quantité de B22 étant de 1,5 à 3,5 % en poids.

6. Copolymère greffé B selon l'une quelconque des revendications 1 à 5, la couche B4 étant constituée d'au moins un copolymère constitué d'un monomère vinylaromatique B41 et d'un monomère de nitrile B42, la quantité de B42, sur la base de B4, étant de 22 à 28 % en poids.

7. Copolymère greffé B selon l'une quelconque des revendications 1 à 6,

le monomère réticulant B12 et/ou B22 étant l'acrylate de dihydrodicyclopentadiényle ;
le monomère vinylaromatique B11 et/ou B41 étant le styrène ;
le monomère de nitrile B42 étant l'acrylonitrile ; et
l'acrylate d'alkyle en C2-C8 B21 étant l'acrylate de n-butyle.

8. Procédé pour la préparation d'un copolymère greffé B selon l'une quelconque des revendications 1 à 7 comprenant les étapes suivantes :

(i) tout d'abord production d'un noyau (= base de greffage) B1 en présence d'un latex de polymère d'ensemencement (S-B1) - ayant un diamètre moyen de particule en poids $d_w$ inférieur à celui des particules de la base de greffage finale B1 - par polymérisation en émulsion, en polymérisant un monomère B11 et un monomère réticulant B12 ;
(ii) ensuite, sur ce latex résultant de noyau B1, dans une première réaction de greffage, une première couche B2 est préparée par addition et polymérisation d'au moins un acrylate d'alkyle en C2-C8 B21, éventuellement d'autres comonomères, et de monomères réticulants B22 ;

(iii) ensuite, sur ce latex de caoutchouc résultant, dans une deuxième réaction de greffage, une deuxième couche B3 est préparée par addition et polymérisation d'au moins un monomère vinylaromatique ; et

(iv) enfin, sur ce latex de copolymère greffé résultant, dans une troisième réaction de greffage, une troisième couche B4 est préparée par addition et polymérisation d'au moins un monomère vinylaromatique B41 et d'au moins un monomère de nitrile B42, et éventuellement d'autres comonomères ;

les étapes (i) à (iv) étant mises en œuvre en émulsion aqueuse avec un initiateur de radicaux libres à des températures allant de 30°C à 120 °C.

9. Procédé pour la préparation d'un copolymère greffé B selon la revendication 8, le latex de polymère d'ensemencement (S-B1), préférablement un latex de caoutchouc d'acrylate réticulé, étant utilisé en des quantités allant de 0,01 à 3 % en poids, sur la base de la quantité totale de monomère utilisée pour la préparation du copolymère greffé B, et le diamètre moyen de particule en poids $d_w$ de S-B1 étant inférieur à 120 nm.

10. Composition de moulage thermoplastique comprenant un mélange de polymères PM constitué de composants A et B :

(A) 30 à 85 % en poids, préférablement 40 à 70 % en poids, plus préférablement 55 à 65 % en poids, d'au moins un copolymère thermoplastique A comprenant au moins un monomère vinylaromatique, préférablement le styrène, A1, et au moins un monomère de nitrile, préférablement l'acrylonitrile, A2 ;

(B) 15 à 70 % en poids, préférablement 30 à 60 % en poids, plus préférablement 35 à 45 % en poids, d'au moins un copolymère greffé B selon l'une quelconque des revendications 1 à 7 ;

où la somme de A et B totalise 100 % en poids.

11. Composition de moulage thermoplastique selon la revendication 10 comprenant des composants supplémentaires C, D et/ou E :

40 à 100 % en poids d'un mélange de polymères PM composé de composants A et B tels que définis ci-dessus ;

0 à 30 % en poids d'au moins un copolymère greffé supplémentaire C - différent du copolymère greffé B - composé d'un polymère d'acrylate réticulé, élastomérique C1 (= base de greffage C1) et d'au moins une enveloppe de greffage C2, qui est obtenue via polymérisation en émulsion en la présence d'au moins une base de greffage C1, laquelle enveloppe de greffage C2 est composée d'un mélange comprenant au moins un monomère vinylaromatique C2-1 et au moins un monomère de nitrile C2-2 ;

0 à 20 % en poids d'additifs et/ou d'auxiliaires D ; et

0 à 50 % en poids d'au moins un polymère thermoplastique supplémentaire E choisi parmi des polycarbonates et des polyamides aromatiques ;

sur la base dans chaque cas de la composition de moulage globale, et où la somme de PM et des composants C, D et/ou E totalise 100 % en poids.

12. Composition de moulage thermoplastique selon la revendication 10 ou 11, la proportion du monomère de nitrile A2, sur la base de A, du copolymère thermoplastique A étant de 20 à 35 % en poids.

13. Composition de moulage thermoplastique selon l'une quelconque des revendications 10 à 12, le copolymère greffé C ayant une enveloppe de greffage C2 constituée de seulement une couche (= couche unique) composée d'un mélange comprenant au moins un monomère vinylaromatique, en particulier le styrène, C2-1, et au moins un monomère de nitrile, en particulier l'acrylonitrile, C2-2, où la quantité de C2-2, sur la base de la quantité totale de C2, est de 20 à 35 % en poids, préférablement de 22 à 30 % en poids.

14. Composition de moulage thermoplastique selon l'une quelconque des revendications 10 à 12, l'enveloppe de greffage C2 du copolymère greffé C étant constituée d'une première couche C21 composée d'au moins un monomère vinylaromatique, et d'une deuxième couche C22 composée d'un mélange comprenant au moins un monomère vinylaromatique C22-1 et au moins un monomère de nitrile C22-2 ; où la quantité de C22-2, sur la base de la quantité totale de C22, est de 20 à 35 % en poids, et le diamètre moyen de particule en poids $d_w$ de la base de greffage C1 du polymère greffé C étant dans la plage allant de 300 à 700 nm, préférablement de 350 à 650 nm, plus préférablement de 400 à 600 nm.

15. Procédé pour la préparation de compositions de moulage thermoplastique selon l'une quelconque des revendications 10 à 14 par mélange en fusion d'un copolymère greffé B avec un copolymère A et, s'ils sont présents, avec les composants supplémentaires C, D et/ou E dans un appareil de mélange.

16. Articles façonnés produits à partir des compositions de moulage selon l'une quelconque des revendications 10 à 14.

17. Utilisation de copolymères greffés selon l'une quelconque des revendications 1 à 7 ou de compositions de moulage selon l'une quelconque des revendications 10 à 14 dans l'industrie automobile, pour le bâtiment et la construction, des jouets et/ou les loisirs.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 3149358 A
- EP 0450485 A
- US 20110275763 A
- WO 2007142473 A
- EP 2889317 A
- EP 0535456 A
- EP 0548762 A
- EP 0534212 A
- DE 19523080 A1
- US 2520959 A
- WO 200130901 A
- WO 200228931 A
- EP 1191044 A
- DE 3227555 A
- EP 0006503 A1
- US 20160297957 A
- DE 1300266 B
- DE 1495730 A
- EP 38094 A
- EP 38582 A
- EP 39524 A
- EP 129195 A
- EP 129196 A
- EP 0993476 B

### Non-patent literature cited in the description

- Kunststoff-Handbuch [Plastics handbook. Carl-Hanser-Verlag, 1969, vol. V, 124
- **SCHOLTAN ; H. LANGE ; KOLLOID-Z. U. Z.** *Polymere,* 1972, vol. 250, 782-796
- **W. WOHLLEBEN ; H. SCHUCH.** Measurement of Particle Size Di. Vega. *Chromatography HDC,* 130-153
- Methoden der organischen Chemie. **HOUBEN-WEYL.** Methods of Organic Chemistry. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- **HOUBEN-WEYL.** Methoden der organischen Chemie. vol. E 20, 2168
- *Encyclopedia of Polymers,* vol. 11, 315